(19) Europäisches Patentamt
European Patent Office
Office européen des brevets

(11) **EP 4 306 322 B1**

(12) **EUROPÄISCHE PATENTSCHRIFT**

(45) Veröffentlichungstag und Bekanntmachung des Hinweises auf die Patenterteilung:
**14.05.2025 Patentblatt 2025/20**

(21) Anmeldenummer: **23178207.9**

(22) Anmeldetag: **08.06.2023**

(51) Internationale Patentklassifikation (IPC):
**B41C 1/10** (2006.01)    **B41C 1/18** (2006.01)
**G06T 7/00** (2017.01)    **B41N 3/00** (2006.01)
**G06T 7/60** (2017.01)

(52) Gemeinsame Patentklassifikation (CPC):
**G06T 7/001; G06T 7/60;** B41N 3/00;
G06T 2207/20081; G06T 2207/20084;
G06T 2207/30164

(54) **VERFAHREN ZUR PRÜFUNG VON TIEFDRUCKZYLINDERN UND TIEFDRUCKPLATTEN**

METHOD FOR TESTING GRAVURE CYLINDERS AND GRAVURE PLATES

PROCÉDÉ POUR L'INSPECTION DE CYLINDRES D'IMPRESSION EN CREUX ET DE PLAQUES D'IMPRESSION EN CREUX

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **12.07.2022 DE 102022117384**

(43) Veröffentlichungstag der Anmeldung:
**17.01.2024 Patentblatt 2024/03**

(73) Patentinhaber: **Janoschka AG**
**77971 Kippenheim (DE)**

(72) Erfinder: **ZIPF, Werner**
**77971 Kippenheim (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
DE-A1- 102019 117 680    US-A1- 2007 089 625
US-A1- 2020 364 842    US-A1- 2021 333 221

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der vorliegenden Erfindung ist ein Verfahren zur Erkennung von Fehlern auf Tiefdruckzylindern oder Tiefdruckplatten. Insbesondere sieht das Verfahren den Einsatz Neuronaler Netze vor.

Im Folgenden wird von Tiefdruckzylinder gesprochen. Alle Verfahrensschritte (mit Ausnahme der Rotation) sind analog auf Tiefdruckplatten anwendbar bzw. werden entsprechend getrennt erläutert.

Beim Tiefdruck werden Farben in Vertiefungen der Oberfläche von Metallzylindern oder - platten eingebracht und von dort auf das zu bedruckende Medium (Papier, Gewebe etc.) übertragen. Die Vertiefungen sind als eine Vielzahl von Einzelvertiefungen (Näpfchen oder cups genannt) ausgebildet.

Eine bebilderte (gravierte) Oberfläche entsteht, indem durch unterschiedliche Verfahren Vertiefungen in eine Zylinderoberfläche (Tiefdruckzylinder) angebracht werden. Die zentralen Bebilderungsverfahren im Tiefdruck sind elektromechanische Gravur mit einem Diamantstichel, durch Laserlicht oder mittels eines chemischen Prozesses der Ätzung.

Jeder Bebilderungsprozess erstellt entsprechend seinem technischen Verfahren typische Napfformen, wobei die Anordnung dieser Napfformen auf der Zylinderfläche fertigungstechnischen Randbedingungen des Herstellungsprozesses unterliegt. Typischerweise sind die Näpfchen als Vertiefungen mir rhombenförmiger Öffnung ausgeführt. Die Rhomben sind dabei in parallelen Spalten angeordnet, wobei benachbarte Spalten um einen halben Abstand der Rhombenmittelpunkte einer Spalte versetzt sind, so dass die Rhombenspalten miteinander verzahnt angeordnet werden können.

Typische Ausführungsformen sind geschlossene Näpfchen (closed cells), bei denen die Ecken benachbarter Zellen einer Spalte voneinander getrennt, also jedes Näpfchen für sich, abgeschlossen, in der Oberfläche existiert und offene Näpfchen (open cells), bei denen die Ecken benachbarter Zellen einer Spalte miteinander verbunden sind. Die Verbindung der Ecken ist als direkte Berührung, oder mittels eines kurzen Kanals, der den Abstand zwischen den Ecken überbrückt, realisiert.

Beim Gravieren der Oberfläche des Tiefdruckzylinders können bereits Beschädigungen auf der Oberfläche enthalten sein bzw. beim Gravieren Beschädigungen der Oberfläche oder fehlerhafte Näpfchen entstehen. Diese Schäden zu erkennen und kategorisieren ist eine wiederkehrende Aufgabe der Qualitätssicherung bei Tiefdruckzylindern.

Gegenstand der DE 10 2019 117 680 A1 ist ein Verfahren zur Vermessung von Defekten von Bauteilen in einem Qualitätsprüfungsverfahren. Das Verfahren nutzt ein erfasstes digitales Bild eines zu untersuchenden Bauteils und ein erstes Referenzbildes des zu untersuchenden Bauteils. Ein zweites Referenzbild wird aus einer Kombination des erfassten digitalen Bildes und des ersten Referenzbildes gebildet. Darüber nutzt das Verfahren ein trainiertes Machine-Learning basiertes Klassifikatorsystems, welches mit Trainingsdaten zur Bildung eines Modells trainiert wurde, wobei das Modell als Basis für eine semantische Segmentierung von Voxel des empfangenen Bildes in Defektklassen dient Es erfolgt ein Klassifizieren durch das aktivierte Klassifikatorsystems von Voxel des empfangenen digitalen Bildes, wobei als Eingangsdaten für das Klassifikatorsystems sowohl Voxel des empfangenen digitalen Bildes als auch Voxel des zweiten Referenzbildes dienen. Der Einsatz einer SVM wird explizit benannt. Das Vorhandensein eines fehlerfreien Referenzbildes ist bei diesem Verfahren wesentlich. Es wird die Gesamtstruktur des erfassten Bildes mit der Gesamtstruktur des Referenzbildes verglichen. Ein Erkennen und eine Analyse der einzelnen in dem erfassten Bild vorhandenen Elemente (Strukturen aus mehreren Pixeln/Voxel) erfolgen nicht.

Bekannte Verfahren sehen die Durchführung eines Probedrucks mit anschließender Prüfung des Druckergebnisses vor.

Die DE 10 2008 016 538 A1 schlägt zur Beurteilung von Druckergebnissen vor, auf dem bedruckten Substrat Text- und Bildbereiche zu erkennen und die Bildbereiche mit einer Multispektralkamera zu erfassen und anschließend, nach einer Bildverarbeitung, die gewonnenen Werte mit Referenzwerten zu vergleichen.

Die EP 0 749 833 A2 versucht das Problem zu lösen, dass bei der Bilderfassung des bedruckten Materials keine gleichmäßige Helligkeit erzielt wird. Das vorgeschlagene System soll örtliche und zeitliche Konstanz der Messungen gewährleisten.

Gegenstand der EP 0 795 400 A1 ist ein Verfahren zur Ausrichtung von aufgenommenen Bildern für einen Bildvergleich. Dazu wird ein Referenzbild erfasst und in Grauwerte umgewandelt. Analog wird das zu bewertende Bild erfasst. Aus dem Vergleich der beiden Bilder wird eine Transferfunktion gewonnen, die die Bildbereiche einander zuordnet.

Die GB 2 159 622 A beschreibt detailliert die Algorithmen, die beim Vergleich eines Referenzbildes mit einem Vergleichsbild angewendet werden. Dabei wird die Druckgeschwindigkeit, bei das Referenz- und das Vergleichsbild gewonnen wurden, in die Berechnung mit einbezogen.

Die JP 2012154830 Ist darauf gerichtet, von der Tiefdruckplatte erzeugte Fehler im Druckprodukt zu erkennen. Dazu wird nicht ein erstes mittels der Druckplatte erzeugtes Bild als Referenz verwendet, sondern ein vorher, unabhängig von der Druckplatte, erzeugtes Bild.

Die US 2007/0201066 A1 beschreibt Analyseverfahren für Bilder zur Qualitätskontrolle, die von bedrucktem Material aufgenommen wurden.

Die US 2019/0340740 A1 schlägt vor, die menschliche Einschätzung von Druckqualitäten auf einzelne Parameter des Druckbildes zurückzuführen und so eine Parametersammlung zur Bestimmung der Druckqualität aufzubauen. Von einer Kamera aufgenommene Abbildungen von bedruckten Substraten sollen anschließend auf die genannten Parameter heruntergerechnet und kategorisiert werden.

Nachteilig an Verfahren zur Inspektion des Druckbildes ist der große Aufwand. Die Tiefdruckzylinder müssen für die Prüfung in eine Druckmaschine eingebracht und nach dem Probedruck wieder ausgebaut und gereinigt werden.

Fortgeschrittene Verfahren sehen die direkte Inspektion der Oberfläche der Tiefdruckzylinder vor.

Die US 2017/0246853 A1 beschreibt: "Ein Druckgerät trägt Farbe auf eine Oberfläche einer Druckplatte in Form eines vorgegebenen Musters auf und überträgt dann die Tinte auf ein Substrat. Die Druckvorrichtung enthält einen Bildaufzeichnungsabschnitt, der die Tinte auf die Oberfläche der Druckplatte aufträgt; eine Plattenoberflächenbeobachtungseinheit, die Informationen über die Oberfläche der Druckplatte erfasst; einen Speicherabschnitt, der Informationen über eine Referenzform, die als Referenz der Oberfläche der Druckplatte dient und einen Bestimmungsabschnitt, der die Informationen über die Referenzform, die in dem Speicherabschnitt gespeicherten Informationen über die Referenzform mit den Informationen über die Oberfläche der Druckplatte vergleicht, die durch die Plattenoberflächenbeobachtungseinheit erhalten wird und bestimmt, ob die Oberfläche der Druckplatte, auf die die Farbe aufgetragen wurde, in einem vorbestimmten Bereich der Referenzform liegt."

In Ausführungsformen ist auch die Beseitigung von Fehlern (Verunreinigungen) auf der Druckplatte mittels Laser vorgesehen.

In der CN 108481891A werden die Druckrollen in ein Inspektionsgestell eingesetzt und mit einem Kamerasystem abgetastet. Das Kamerasystem und die nachgeschaltete Datenverarbeitungseinheit erstellen ein dreidimensionales Bild jeder Zelle (cup) der Rolle. Anschließend wird das Volumen der Zelle berechnet und mit einem Vorgabewert verglichen. Die EP 0 636 475 B1 sieht den Vergleich eines Bildes der Oberfläche einer Druckplatte oder eines Druckzylinders entweder mit einem Referenzbild oder einem Regelsatz vor, der den Positiv/Negativ-Zustand von Abschnitten der Druckplatte/des Zylinders beschreibt. Einige der eingesetzten mathematischen Methoden werden aufgeführt.

Die DE 10 2005 002 351 A1 schlägt ein Verfahren zur Erfassung der Oberflächentopologie unter Druck vor. Dabei wird mittels Lichtabtastung ein Oberflächenprofil gewonnen. In Abschnitt [0067] ist die Berechnungsmethode kurz umrissen.

In der JP 2002254590 ist ein Gestell zur Inspektion eines Gravurzylinders (Druckwalze) beschrieben. Der Zylinder wird drehbar in dem Gestell gehalten und ein Kamerabild seiner Oberfläche erzeugt. Eine Bilderkennungssoftware soll Fehler erkennen.

Die JP 2018039117A bezieht sich auf eine Vorrichtung zur Untersuchung des Oberflächenzustands einer Tiefdruckplatte. Eine Anomalität der Plattentiefe wird durch kontinuierliche Überwachung erkannt. Eine automatische Reinigungsmaschine kann bei Bedarf angesteuert werden. Auch hier wird ein dreidimensionales Abbild der Oberfläche gewonnen, indem diese mit Laserlicht bestrahlt und das reflektierte Licht von einer Kamera erfasst wird. Anschließend erfolgt eine automatisierte Bewertung.

In der WO 2008/049510 A1 werden ein Verfahren und eine Vorrichtung zur Inspektion von Druckzylindern beschrieben. Die Vorrichtung weist mehrere Messeinrichtungen auf, die die Zylinderoberfläche mechanisch und optisch abscannen und ein Abbild dieser erzeugen. Das Verfahren berechnet ein Andruckbild, ohne dass tatsächlich ein Druck stattfinden müsste.

US 2007/089625 A1 betrifft ein Verfahren, in dem Defekte sowohl in den Näpfchen als auch in der Oberfläche eines Druckzylinders an Hand einer Bildanalyse erkannt werden.

Im Allgemeinen werden die eingesetzten Methoden zur Bildverarbeitung nicht detailliert beschrieben.

Vorgeschlagen werden auch Verfahren bzw. Vorrichtungen, die Parameter der Druckerpresse in die Fehleranalyse einbeziehen:
Die JP 2014106069A setzt sowohl Bilder des Druckergebnisses als auch der Druckplatte ein, um aus der Kombination der Abbildungen eine Fehlererkennung zu generieren. Die Methoden der Bildverarbeitung werden nur allgemein beschrieben:
"The inspection processing is alignment processing by pattern matching, normalized correlation, etc., filtering processing such as averaging and maximization, centering on difference processing between the reference image obtained at the time of conveyance and the inspection image to be inspected."

Aktuell gibt es erste Versuche Methoden der Künstlichen Intelligenz (KI) und Neuronale

Netze (NN) in die Prüfung von Tiefdruckwalzen einzubeziehen:
Die CN 106739485A sieht vor, dass eine Reihe von Parametern des Druckzylinders gemeinsam mit Farbsignalen des rotierenden Druckzylinders erfasst werden. Die Daten werden einem Algorithmus zugeführt, der den Überdruck-Fehler ermittelt. Die Korrektur des Ergebnisses durch ein neuronales Netz ist vorgesehen.

Die JP 2019117105A sieht den Einsatz eines neuronalen Netzes zur Kategorisierung von Fehlern des Druckbildes vor. Die Fehler sollen lediglich in zwei Kategorien (harmlos und nicht harmlos) aufgeteilt werden.

Obwohl bereits eine Vielzahl von Lösungen vorgeschlagen wird, kann das Problem der Inspektion von Tiefdruckzylindern bzw. -platten nicht als befriedigend gelöst angesehen werden. Dies trifft insbesondere auf die gestiegenen Anforderungen an Zuverlässigkeit und Schnelligkeit der Prüfungsverfahren zu.

Es stellt sich somit weiterhin die Aufgabe, ein Verfahren zur Prüfung der Oberfläche von Tiefdruckzylindern bzw. -platten vorzuschlagen, das eine schnelle und zuverlässige Erkennung von Fehlern gewährleistet.

Erfindungsgemäß wird die Aufgabe mit dem Verfahren nach Anspruch 1 gelöst. Vorteilhafte Ausgestaltungen des Verfahrens sind in den rückbezogenen Unteransprüchen offenbart.

Das erfindungsgemäße Verfahren zur optischen Prüfung der Oberflächen von Tiefdruckzylindern und Tiefdruckplatten, sieht mindestens die folgenden Schritte vor:

a) Tiefdruckzylinder oder Tiefdruckplatte in eine Inspektionsvorrichtung einbringen,

b) Scannende optische Erfassung der Oberfläche des Tiefdruckzylinders oder der Tiefdruckplatte mittels einer Bilderfassungseinheit in einem oder mehreren Messbildern sowie Erfassung der Position der Messbilder relativ zur Oberfläche des Tiefdruckzylinders bzw. der Tiefdruckplatte,

c) Erkennung von Näpfchen durch Abrastern des ersten Messbildes,

d) Vergleich einer Reihe vorgegebener Eigenschaften mit den diesen Eigenschaften zugeordneten vorgegebenen Sollwerten und Aufnahme der Abweichung jeder Eigenschaft vom jeweiligen Sollwert als Wert in einen Merkmalsvektor,

e) Erkennung von Defekten in den Bereichen des ersten Messbildes, in denen keine Näpfchen erkannt wurden,

f) Bestimmung eines Anomaliedefektwertes eines erkannten Defekts,

g) Klassifizierung des Merkmalsvektors jedes Näpfchens und des Anomaliedefektwertes jedes Defekts anhand vorgegebener Ergebnisgewichtung und zulässiger Toleranzwerte jeder Eigenschaft des Merkmalsvektors mittels einer vortrainierten Supportvektormaschine (SVM) und,

h) Wiederholung der Schritte c) bis g) für jedes weitere Messbild,

i) Ausgabe einer Bewertung des Tiefdruckzylinders oder der Tiefdruckplatte, wobei die Bewertung mindestens die Angaben "fehlerfrei" oder "fehlerhaft" beinhaltet.

Die Schritte b) bis i) werden vorzugsweise mit Unterstützung von bzw. in einer oder mehreren Datenverarbeitungsanlagen durchgeführt.

Tiefdruckzylinder oder Tiefdruckplatte in eine Inspektionsvorrichtung einbringen

Die Inspektionsvorrichtung sieht eine drehbare Lagerung für den Tiefdruckzylinder bzw. eine flächige Aufnahme für Tiefdruckplatten vor. Eine Inspektionseinheit erfasst die Oberfläche des Tiefdruckzylinders. Dazu weist die Inspektionseinheit bevorzugt mindestens eine Bilderfassungseinrichtung (bspw. Kamera) und mindestens eine Beleuchtungseinrichtung auf. Mittels geeigneter Strahlumlenkeinrichtungen (Spiegel, Prismen) wird sichergestellt, dass das Licht der Beleuchtungseinrichtung senkrecht oder nahezu senkrecht auf die Oberfläche des Tiefdruckzylinders fällt und dass die Bilderfassungseinrichtung ein Messbild senkrecht oder nahezu senkrecht zur Oberfläche erfassen kann. Durch die senkrechte Beleuchtung und Bilderfassung werden Schatteneffekte an den Kanten von Näpfchen oder Beschädigungen weitgehend vermieden.

Durch eine Relativbewegung der Inspektionseinheit zu der Oberfläche des Tiefdruckzylinders wird eine Abbildung (Messbild bzw. Messbilder) der gesamten Oberfläche (bzw. zumindest der zu inspizierenden Oberfläche) des Tiefdruckzylinders erfasst (scannende optische Erfassung). Diese Abbildung kann entweder als Gesamtbild (Messbild) oder als eine Mehrzahl von Einzelbildern (Messbilder) vorliegen. Vorzugsweise überlappen die Einzelbilder teilweise, um ein Zusammenfügen der Einzelbilder zu einem Gesamtbild zu unterstützen. Bevorzugt werden die Messbilder bzw. das Messbild elektronisch gespeichert und weiterverarbeitet. Jedem Einzelbild bzw. dem Gesamtbild wird die Aufnahmeposition (Lage des Bildes auf der Oberfläche des Druckzylinders), in der es entstanden ist zugeordnet. Dies ermöglicht die Lokalisierung erkannter Defekte auf der Oberfläche des Tiefdruckzylinders.

Die Messauflösung der 2D gescannten Tiefdruckzylinderoberfläche liegt typischerweise bei kleiner 10 $\mu$m. Dieser Wert kann größer oder auch kleiner sein und richtet sich nach den Defektgrößen, die erfasst und ausgewertet werden sollen. Die Messauflösung bestimmt sich durch den Abbildungsmaßstab der optischen Komponenten (Messobjektiv) und der Kamera Pixelgröße. Wesentlich ist, dass die Messauflösung so hoch ist, dass die kleinsten Näpfchen und zu bestimmenden Defekte als flächige (in einer Vielzahl von Pixeln abgebildete) Bildelemente erfasst werden können, die eine Bestimmung der Form der erfassten Näpfchen bzw. Defekte ermöglichen. Aus den optischen Abbildungsgesetzen folgt, dass die Pixelanzahl der Kamera mindestens das doppelte der minimalen Auflösung im Objektfeld, d.h. der zu prüfenden Oberfläche zu wählen ist. Als Beispiel, bei einer gewünschten Messauflösung von 1 $\mu$m wird diese Strecke in der Kamera auf mindestens 2 Pixel abgebildet.

Die Verarbeitung der Messbilder bzw. des einen Messbildes erfolgt in einer elektronischen Datenverarbeitungsanlage.

Es wird entweder jedes Einzelbild separat verarbeitet oder die Einzelbilder werden zu einem einzigen Messbild oder einigen wenigen größeren Messbildern zusammengefügt und anschließend verarbeitet. Zum Zusammenfügen der Einzelbilder zu einem einzigen Messbild oder einigen wenigen großen Messbildern kommen bekannte Algorithmen aus der Bildverarbeitung zum Einsatz, die das Zusammenfügen von Einzelbildern zu einem Gesamtbild leisten.

Bei der Verarbeitung der Einzelbilder bzw. des zusammengefügten einzigen Messbildes oder einigen wenigen großen Messbilder wird für jedes im Messbild erkannte Struktur (Element) zuerst geprüft, ob es sich um ein Näpfchen handelt. Wenn dies ausgeschlossen werden kann, wird auf einen Fehler (Defekt) in der Oberfläche des Tiefdruckzylinders geprüft. Zur Erkennung von Strukturen werden bekannte Verfahren der Bildverarbeitung, bspw. das Schwellwertverfahren verwendet.

Schwellwertverfahren sind aus dem Stand der Technik bekannt und basieren auf der Erkenntnis, dass Abbildungen von Strukturen in einem Bild bspw. eine andere Helligkeit, andere Reflexionseigenschaften oder eine andere Farbe als strukturfreie Oberflächenabschnitte aufweisen. Hier wird ein Schwellwert festgelegt, ab dem die Überschreitung dieses Schwellwertes als zu untersuchende Struktur anzusehen ist.

Erkennung von Näpfchen durch Abrastern des ersten Messbildes

Nunmehr werden die Strukturen in jedem einzelnen Messbild bzw. dem zusammengefügten Messbild identifiziert. Bei den Strukturen kann es sich um geschlossene Näpfchen (closed cells), offene Näpfchen (open cells) oder sonstige Unregelmäßigkeiten (Beschädigungen wie Kratzer oder Krater etc.) handeln.

Prinzipiell existieren erfindungsgemäß drei Varianten zur Näpfchenidentifizierung bzw. Bewertung:

a) Mustererkennung und nachfolgende Bewertung der identifizierten Näpfchen mittels bekannter Methoden der Formerkennung bzw. eigenentwickelten Algorithmen,

b) Erkennung der Näpfchen mit einem ersten Neuronalen Netz und nachfolgende Bewertung der identifizierten Näpfchen mittels bekannter Methoden der Formerkennung bzw. eigenentwickelten Algorithmen,

c) Erkennung der Näpfchen mit einem zweiten Neuronalen Netz, wobei auch die Bewertung der Näpfchen mit dem Neuronalen Netz erfolgt.

Dazu kommen verschiedene Verfahren alternativ oder in Kombination zum Einsatz:

a) Mustererkennung

Die Implementierung der Mustererkennung (Template-Matching) erfolgt vorzugsweise auf Basis der normalisierten Kreuzkorrelation (NCC), der Non-Maxima-Suppression (NMS) sowie der Konturbestimmung auf Basis der Zentren gefundener Näpfchen. Dies kann auch durch Verfahren der Bildtransformation in den Frequenzbereich erreicht werden was sich positiv auf die Berechnungszeit auswirkt. Dieser alternative Lösungsweg beruht auf einer mathematischen Transformation des Messbildes und Templatebildes in deren Frequenzraum (=Fourier Transformation) und einer anschließenden Berechnung in diesem Frequenzraum. Dieses Verfahren bietet unter anderem den Vorteil einer schnelleren Berechnung.

Beim Template-Matching werden Bilder unterschiedlich großer Templates vorab erstellt und diese unterschiedlichen Templates auf im Bild erkannte Strukturen mehrfach angewandt und das beste Korrelationsergebnis erfasst. Als Template wird eine Art Schablone bezeichnet, die die ideale Näpfchenform vorgibt. Es hat sich als vorteilhaft erwiesen, ca. 5 bis 10 unterschiedliche Templategrößen, auch Skalen genannt, jeweils getrennt für open-cell und closed-cell Templates, vorzusehen.

Besonders bevorzugt wird die normalisierte Kreuzkorrelation (NCC) eingesetzt, welche insbesondere folgende Vorteile aufweist:

- Der Wertebereich ist auf [-1 ... 1] normiert und erlaubt eine direkte Beurteilung der Ergebnisse als Prozentwert.
- Die Implementierung ist simpel, die Formel leicht zu interpretieren.
- Durch die Normierung ist eine Vergleichbarkeit zwischen verschiedenen Napftemplates bzw. unterschiedlichen Größen desselben Templates möglich.

Vorzugsweise werden für open-cell und closed-cell Näpfchen unterschiedliche Templates genutzt. Welche Templateform auf dem zu untersuchenden Tiefdruckzylinder vorhanden ist, ist aus dem Gravurprozess bekannt. Auch liefern die Verfahren der Mustererkennung für die beiden Templateformen unterschiedliche Ergebnisse, so dass auch eine automatische Unterscheidung möglich ist.

Nach Identifikation der Näpfchen kann deren geometrischer Mittelpunkt ermittelt werden.

Aufgrund des gefundenen geometrischen Mittelpunkts der Näpfchen kann das Näpfchen auf seine Qualität untersucht werden. Auch hier sind verschiedene Ansätze geeignet:

a1) Ein Ansatz auf Basis des gefundenen geometrischen Mittelpunkts arbeitet mit der Extraktion der Napfkontur. Zum Einsatz können Algorithmen wie convexity defects kommen. Dabei wird eine Kurve gefunden, die das Näpfchen zur Gänze umschließt, und über ihren gesamten Verlauf konvex (nach außen, vom umhüllten Objekt weg gekrümmt) ist.

Die einhüllende konvexe Hülle wird auf Basis eines Polygons erstellt. Der maximale Abstand der Konturpunkte zum Liniensegment des einhüllenden Polygons kann genutzt werden, um ein Maß für mögliche Einbrüche oder sonstige Schäden am Rand des Näpfchens zu erhalten.

a2) Sind die geometrischen Mittelpunkte der Näpfchen gefunden, kann auf Basis der erstellten Napfkontur Information extrahiert werden. Naheliegende Merkmale sind Momente (Momente im Sinne der Bildverarbeitung - Ming-Kuei Hu, "Visual Pattern Recognition by Moment Invariants", doi:10.1109/TIT.1962.1057692) bis zur n-ten Ordnung, z.B. werden Momente bis n=7 als Hu-Momente beschrieben, welche effizient extrahiert werden können.

Die Momente der Idealformen der Näpfchen und somit deren geometrische Abweichung sind bekannt. Die ermittelten Momente können mit denen der Idealformen verglichen und ein oder mehrere Abweichungswerte bestimmt werden.

a3) Verfahren der TemplateDistanceRefAngle (eigenentwickelter Algorithmus): Die Napfkontur wird anhand von ausgewählten Randpunkten bewertet. Dabei wird der erwartete Abstand eines Randpunktes vom Mittelpunkt des Näpfchens mit dem tatsächlichen Abstand ins Verhältnis gesetzt und dies als Maß für die Abweichung von der Idealform verwendet.

Für diese Form des Konturvergleichs (TemplateDistanceRefAngle) von idealem (Template) Näpfchen und gefundenem Näpfchen werden bevorzugt acht Punkte, welche sich an systematischen Punkten des Umfangs des Näpfchens befinden mit den erwarteten Positionen verglichen.

Kritisch gestaltet sich die Bestimmung der 45°-Winkel. Für das Auffinden des relevanten (diskreten) Punktes werden direkte Punkte in der Nachbarschaft untersucht, um zu bestimmen, in welchem Quadranten sich die Punkte befinden.

Eine Verbesserung in der Geschwindigkeit ist durch die Verwendung einer Konturliste der Punkte und die Berechnung des Betrages von Differenz und Summe der Koordinaten zu erreichen. Es gilt dx1 = |x - y| und dx2 = |x + y|. Die Werte ohne Betrag dx und sx ordnen den Quadranten zu. Im Idealfall können in der aus diesen Werten erstellten Liste direkt die Punkte bei 45°, 135°, 225° und 315° gefunden werden:

$$dx1 = 0 \ \& \ sx2 > 0 \ \text{folgt} \ P(x/y) = 45°$$

$$dx1 = 0 \ \& \ sx2 = 0 \ \text{folgt} \ P(x/y) = 225°$$

$$dx = 0 \ \& \ dx2 = 0 \ \text{folgt} \ P(x/y) = 135°$$

$$dx < 0 \ \& \ dx2 = 0 \ \text{folgt} \ P(x/y) = 315°$$

Ein Beispiel für die Distanzen von dx1 wäre dx1 = (4 3 2 0 1 3 6 ...) der zur 0 zugehörige Punkt in der Liste dx2 erlaubt direkt die Überprüfung des Quadranten. Der Vorteil liegt in der schnellen Berechnung, sowie dem Auffinden von nichtidealen Punkten in der Nachbarschaft. Dies ist der Fall bei unregelmäßiger Napfform, welche zu einer Abfolge von Werten ohne 0 führen würde (z.B. dx1 = (4 3 2 1 1 3 4 ...)). Dann kann der erste Punkt mit Wert 1 in der Liste gewählt werden.

Das beschriebene Gütemaß in Verbindung mit dem entwickelten Ansatz des Template-Matchings auf mehreren Skalen in Kombination mit einer geringen Bildvorverarbeitung mit morphologischen Operatoren funktioniert für isolierte Näpfchen sehr gut.

Ein typisches regelmäßiges Druckmuster enthält darüber hinaus auch Näpfchen die über einen Kanal miteinander verbunden sind, d.h. nichtmehr isoliert sind. Um diese zu erfassen und zu beurteilen, erfolgt hier eine Fallunterscheidung unter Verwendung eines zweiten Templates.

Eine Möglichkeit verbundene Näpfchen zu erkennen, besteht in der Nutzung der zweiten Templates. Ein regelmäßiges Druckmuster führt zu einer ersten Fallunterscheidung von open cells im Rand- und im Innenbereich des Druckbereichs.

Es ergeben sich Bereiche in welchem die Näpfchen mit dem bekannten Template für geschlossene Näpfchen erkannt werden Zudem ergeben sich Bereiche, in welchem das Template für geschlossene Näpfchen versagt.

Mit dem zweiten Template für open cells können dann alle noch nicht identifizierten Näpfchen erkannt werden. Idealerweise ergeben sich für das offene Näpfchen zwei Rundungen, die den Napfstegen entsprechen, welche nicht geschlossen sind.

Sollte auch das Template für offene Näpfchen keine Übereinstimmung mit der gefundenen Struktur aufweisen, handelt es sich mit hoher Wahrscheinlichkeit um einen Fehler auf der Oberfläche der Druckwalze.

Eine Möglichkeit bestehende Methoden zur Bewertung des gefundenen Näpfchens oder der sonstigen Unregelmäßigkeit auf der Oberfläche der Druckplatte (bzw. in deren Messbild) zu verwenden, ergibt sich durch das Einfügen eines Rahmens durch das untersuchende Neuronale Netz oder die sonstige, zur Messbildverarbeitung und Bewertung eingesetzte Software. Dieser (vorzugsweise rechteckige) Rahmen schließt das gefundene Näpfchen bzw. die sonstige Unregelmäßigkeit ein. Mit diesem Rahmen kann wiederum das Zentrum des Näpfchens bestimmt werden. Anschließend können bereits bewährte Algorithmen der Konturverfolgung und -bewertung vergleichbar der closed cells auch für open cells angewendet werden. Vorzugsweise genutzt werden auch Algorithmen entsprechend dem "TemplateDistanceRefAngle". Alternativ können geeignete Algorithmen der Konturverfolgung und -bewertung auch ohne extra eingefügten Rahmen genutzt werden. Diese orientieren sich dann bspw. an der Außenkontur des Näpfchens bzw. der sonstigen Unregelmäßigkeit.

Resultieren im Falle eines gebrochenen Steges, zwischen zwei eigentlich verbundenen Näpfchen, mehr als zwei geschlossenen Konturflächen kann auf einen Defekt geschlossen werden.

Der aktuell eingesetzte Algorithmus für die Defekterkennung besteht aus den folgenden Schritten:

    1. Bildvorverarbeitung: Kontrastverbesserung, Binarisierung, morphologisches Öffnen
    2. Auffinden von Napfzentren:

- Templatematching mittels der normalisierte Kreuzkorrelation (NCC) und mehreren Skalen (Templategrößen)
- Maximumsuche im Ergebnisraum der skalierten Templates
- Non-Maxima-Suppression

    3. Bewertung der Näpfchen:

- Konturbewertung mit convexity defects aus OpenCV
- Konturbewertung durch Templatevergleich an acht Kernpunkten
- Konturbewertung durch Templatevergleich der Ideal-Stegform bei open-cell Näpfchen

    4. Fallunterscheidung gefundener Defekte:

- Fall a: Napfkontur ohne erkennbare Deformation: Näpfchen
- Fall b: Napfkontur mit erkennbarer Deformation: Defekt an Näpfchen
- Fall c: Keine Napfkontur - aber erkennbar: Defekt

Die Erkennung von Defekten im Näpfchen auf Basis ausgewählter Merkmale erfolgt hierbei über die Parametern $\theta$, welche aus den bereits genannten Bewertungen abgeleitet werden. So ergibt sich beispielsweise für $n$ Merkmale der Vektor $\theta = [\theta 1\ \theta 2\ ...\ \theta n]$

Gegeben die verwendete Bewertung, wie folgt:

$$\theta = \begin{bmatrix} \theta_1 \\ \theta_2 \\ \theta_3 \\ \theta_4 \\ \theta_5 \\ \theta_6 \end{bmatrix} = \begin{bmatrix} d_{45°} \\ d_{135°} \\ d_{225°} \\ d_{315°} \\ d_{conv} \\ \theta_{NCC} \end{bmatrix}$$

Hierin bezeichnet $dx_°$ den Abstand der Kontur zum Ideal (Wert des Templates unter diesem Winkel) bei x Grad. Der Wert des convexity defects findet sich in dconv und die Güte der normalisierten Kreuzkorrelation in $\theta_{NCC}$.

Optional kann auch das Verfahren der Bestimmung (und Bewertung) der fraktalen Dimension des erkannten Näpfchens einbezogen werden. Dafür ist bspw. die boxcounting-Methode geeignet. Bei dieser wird das Näpfchen nacheinander mit Quadraten einer vorgegebenen Seitenlänge vollständig bedeckt. Die Seitenlänge der Quadrate wird mehrfach reduziert. Wenn die Anzahl der benötigten Quadrate gegen das Inverse deren Seitenlänge doppeltlogarithmisch aufgetragen wird, entsteht eine Gerade, deren Anstieg als fraktale Dimension interpretiert werden kann. Abweichungen dieses Anstiegs gegenüber einem vorherbestimmten Wert können zur Beurteilung der Näpfchen hinsichtlich deren Fehlerfreiheit genutzt werden. Vorteilhaft ist, dass dieses Verfahren unabhängig von der Größe der Näpfchen funktioniert.

Es sind eine Reihe weiterer ähnlicher Definitionen für fraktale Dimensionen bekannt und geeignet (https://de.wikipedia.su/wiki/Fraktale_Dimension#Boxcounting-Dimension).

Zusammenfassend kann die Reihe der vorgegebenen Eigenschaften, die zur Bewertung der Näpfchen herangezogen werden die folgenden beinhalten: Flächengrößenabweichung (Abweichung charakteristischer Größen wie Länge, Höhe etc vom Template oder abweichende Verhältnisse der Größen zueinander), Konvexitätsfehler (siehe a1)), Konvexitätshülle der Näpfchen, Formübereinstimmungen mittels HU-Momenten (siehe a2)), Konturabstände der Näpfchen (TemplateDistanceRefAngle), Fraktale Dimension sowie einem Verfahren zur Bewertung der Konturabweichung (siehe a3)).

Die Ergebnisse des Vergleichs der vorgegebenen Eigenschaften mit den Sollwerten werden als Komponenten in einen Merkmalsvektor aufgenommen. Dies kann als prozentuale oder absolute Abweichung von den Sollwerten erfolgen. Es sind selbstverständlich auch andere Quantifizierungen (bspw. logarithmische Abweichungen etc,) möglich. Die Auswahl der geeigneten Methoden zur Bildung der Komponenten des Merkmalsvektors erfolgt in Abhängigkeit von der Größe des Einflusses von Schwankungen des Ergebnisses auf die Korrektheit der Auswertung.

Optional kann das Verfahren zur optischen Prüfung der Oberflächen von Tiefdruckzylindern und Tiefdruckplatten dadurch ergänzt werden, dass aufgrund der bekannten Bilder, die auf dem Tiefdruckzylinder bzw. der Tiefdruckplatte eingraviert sind, geprüft wird, ob eine Abweichung einer Näpfchenposition von den Bilddaten vorliegt, wobei ein Wert ermittelt wird, der in den Merkmalsvektor eingeht.

Weiterhin optional kann aus der Abweichung der Position einzelner Näpfchen von dem regelmäßigen Muster, das sich aus der Vielzahl der Näpfchen ergibt (Abweichung im Näpfchenmuster), ein Wert ermittelt wird, der in den Merkmalsvektor eingeht.

b) Erstes Neuronales Netz

Ein weiteres Vorgehen zur Näpfchenidentifikation bietet ein erstes vortrainiertes neuronales Netz. Dieses erkennt die Näpfchen und markiert diese. Eine nachfolgende Bestimmung von geometrischem Schwerpunkt und Kontur des erkannten Näpfchens ermöglicht die Untersuchung der Näpfchen analog zur Weiterverarbeitung von mittels Template-Matching erkannten Näpfchen. Dies beinhaltet wieder die Bestimmung von convexity-defects oder Momenten, wie unter a1) oder a2) beschrieben.

Zur Näpfchenidentifikation kommen vorzugsweise entweder one stage (einstufige) oder two stage (zweistufige) Architekturen Neuronaler Netze zum Einsatz. Die zweistufigen Verfahren erreichen oftmals höchste Genauigkeiten, sind aber im Vergleich zu einstufigen Verfahren deutlich langsamer (in etwa Faktor 20). Der populärste Vertreter ist Faster-RCNN (Shaoqing Ren u. a. "Faster R-CNN: Towards Real-Time Object Detection with RegionProposal Networks". In: CoRR abs/1506.01497 (2016). arXiv: 1506.01497. url: http://arxiv.org/abs/1506.01497). Für die gegebene Problemstellung sind aber auch einstufige Verfahren geeignet, sinnvolle Architekturen sind Retina-Net (Tsung-Yi Lin u. a. "Focal Loss for Dense Object Detection". In: CoRR abs/1708.02002 (2017). arXiv: 1708.02002. url: http://arxiv.org/abs/1708.02002) und YOLOv4 (Alexey Bochkovskiy, Chien-Yao Wang und Hong-Yuan Mark Liao. "YOLOv4: Optimal Speed and Accuracy of Object Detection". In: CoRR abs/2004.10934 (2020). arXiv: 2004.10934. url: https://arxiv.org/abs/2004.10934). Besonders bevorzugt wird YOLOv4 genutzt.

c) Zweites Neuronales Netz

In einer Ausführungsform des erfindungsgemäßen Verfahrens erkennt ein zweites vortrainiertes neuronales Netz die Näpfchen und bewertet diese auch gleich. Als Ergebnis entsteht ein Vertrauenswert, der ein Maß für die Fehlerfreiheit des erkannten Näpfchens darstellt. Dieser Wert wird als Komponente in den Merkmalsvektor übertragen. In dieser Ausführungsform ist das zweite Neuronale Netz quasi das erste Neuronale Netz, das um die Bewertungsfunktion erweitert wurde.

Bevorzugt handelt es sich sowohl beim ersten als auch beim zweiten Neuronalen Netz um ein YOLOv4-Netz.

Erkennen von Fehlern in den unbebilderten Bereichen des Tiefdruckzylinders

Prinzipiell ist aus der Druckvorlage bekannt, welche Bereiche eines Tiefdruckzylinders bebildert sein sollen bzw. welche unbebildert sind. Ein Vergleich mit dem Referenzbild (dem zu erwartenden Bild, das aus der Druckvorverarbeitung bekannt ist) kann die zu untersuchenden Bereiche des Messbildes eingrenzen.

Weiterhin ist es möglich, den unbebilderten Bereich zu bestimmen, indem die Bereiche, in denen Näpfchen erkannt wurden, vom Messbild bzw. den Messbildern abgezogen wird, so dass nur noch die Bereiche ohne Näpfchen als zu untersuchende Bereiche verbleiben.

Die beiden vorstehenden Vorgehensweisen können genutzt werden, um die Verarbeitung zu beschleunigen.

Im Allgemeinen wird jedoch ein komplettes Messbild auf Fehlereigenschaften untersucht.

Die Inspektion eines komplett unbebilderten Tiefdruckzylinders, entspricht fertigungstechnisch der einer Kupferoberfläche bzw. eines bebilderten Tiefruckzylinders mit einer verchromten Oberfläche in Bereichen, in denen keine Napfformen vorhanden sind.

Eine Kupferoberfläche erscheint matt glänzend und reflektierend mit einer Oberflächenstruktur und Rauigkeit, die durch Schleifsteine oder Schleifbänder erzeugt werden.

Typische Fehlerursachen sind u.a. metallische Kupfer-Fehlstellen, verursacht durch Probleme im galvanischen Aufkupferungsprozess, weiterhin Schlieren, Kratzer, Löcher, Dellen usw.

Die Erkennung von Fehlern in den unbebilderten Bereichen des Tiefdruckzylinders erfolgt vorzugsweise mittels

    i. Schwellwertverfahren zur Objekterkennung, und/oder
    ii. einem vortrainierten dritten neuronalen Netz

Die Schwellwertverfahren sind aus dem Stand der Technik bekannt und basieren auf der Erkenntnis, dass Abbildungen von Fehlern bspw. eine andere Helligkeit andere Reflexionseigenschaften oder eine andere Farbe als unbeschädigte Oberflächenabschnitte aufweisen. Hier wird aufgrund von Erfahrungswerten, optional abhängig von der Oberflächenbeschichtung, ein Schwellwert festgelegt, ab dem die Überschreitung eines Schwellwertes als Fehler anzusehen ist.

Alternativ oder ergänzend kann auch der unbebilderte Bereich mit einem dritten Neuronalen Netz untersucht werden. Bevorzugt kommt hier ein Convolutional Neuronal Network unter Einsatz eines Patch Distribution Modelling Framework (PaDiM) zum Einsatz. PaDiM verwendet ein vortrainiertes Convolutional Neural Network (CNN) für die Patch-Einbettung und multivariate Gaußsche Verteilungen, um eine probabilistische Darstellung der Normalklasse zu erhalten. Es nutzt auch Korrelationen zwischen den verschiedenen semantischen Ebenen von CNN, um Anomalien besser zu lokalisieren. PaDiM übertrifft aktuelle Ansätze zur Erkennung und Lokalisierung von Anomalien. Die hochmoderne Leistung und die geringe Komplexität von PaDiM machen es zu einem guten Kandidaten für viele industrielle Anwendungen.

Durch Schwellwertverfahren bzw. das dritte Neuronale Netz erkannte Fehler werden anschließend durch einen Anomaliedefektwert bewertet. Der Anomaliedefektwert ist ein kennzeichnender Wert für die Schwere eines Fehlers und vermittelt somit ein Maß für den Fehler. Die Auswertung des Anomaliedefektwertes erfolgt, wie weiter unten erläutert, indem der Anomaliedefektwert in einen Merkmalsvektor aufgenommen und durch eine Supportvektormaschine (SVM) geprüft wird, ob der Merkmalsvektor (und damit auch der Anomaliedefektwert) in einem zulässigen Volumen liegt. Der Anomaliedefektwert wird dabei unter Einbeziehung einiger oder aller der folgenden Eigenschaften des Defekts ermittelt: der Fläche, den Ausdehnungen in mindestens zwei voneinander abweichenden Richtungen, dem Verlaufswinkel zur Abrollrichtung des Tiefdruckzylinders.

Dabei wird bspw. auf die von PaDiM gefundene Defektkontur ein "Ellipse Fitting" unter Verwendung von OpenCV angewandt, mit dem Ergebnis, dass die Defektfläche mit einem Rechteck und einem Richtungsvektor ausgewiesen wird. Sowohl Fläche, maximaler Abstand zweier Punkte oder Richtungsvektor sind hier als Gütemaßparameter geeignet.

Eine beispielhafte Berechnungsmethode für den Anomaliedefektwert ist in Gleichung (1) angegeben.

**Anomaliedefektwert für Kratzer:**

$$Adw = \frac{L}{B} \times \frac{A}{Amax} \tag{1}$$

Mit Adw.-Anomaliedefektwert, L- Länge, B- Breite, A-Fläche, F1, F2- Scheitelpunkte der einhüllenden Ellipse, Amax-empirischer Wert einer kritischen Defektfläche, $\alpha$-Winkel zur Zylinderachse, Ggf. wird der Gleichung (1) eine Abhängigkeit (Func($\alpha$)-) vom Winkel a hinzugefügt, die die Auswirkung der Ausrichtung des Winkels zur Zylinderachse beschreibt. Diese Abhängigkeit ist Funktion von Eigenschaften der Druckfarbe wie bspw. der Viskosität. Sie wird empirisch ermittelt, so dass sich keine allgemeingültige Funktion angeben lässt.

Mit anderen Worten, errechnet sich der Betrag des Anomaliedefektwertes aus den Parametern der Ellipse. Die Ellipse gehört zu den Kegelschnitten, und bildet eine geschlossene Kurve, die die Form eines gestauchten Kreises hat und um zwei feste Punkte, die Brennpunkte, verläuft (wobei der Abstand von dem einen Brennpunkt und der Abstand von dem anderen Brennpunkt überall die gleiche Summe ergeben). Werden die aus dem Ellipsen-Fitting gewonnenen Werte der Hauptscheitel L und Nebenscheitel B, der Ellipsenfläche A und, optional den Ellipsenhauptachsenwinkel $\alpha$, in die Formel eingetragen, berechnet sich daraus dessen Betrag. Der Wert von Amax ist ein empirischer Wert in der Art eines Schwellwerts und Indikator, ab wann ein Defekt bzw. Kratzer negativen Einfluss auf die Produktqualität hat. Dies ist von den Anforderungen an das Produkt abhängig.

Die Ergebnisse der einzelnen Verfahren zur Bewertung der Näpfchenformen und der Oberflächenformen gehen mit unterschiedlichen, vorher festgelegten Anteilen in den Merkmalsvektor ein. Vorzugsweise liefern die Verfahren zur Bewertung der Näpfchenformen einen gemeinsamen Wert, der zu 100 % in den Merkmalsvektor eingeht. Die Verfahren zur Bewertung von Abweichungen von Näpfchenpositionen und -muster gehen ebenfalls jeweils zu 100% in den Merkmalsvektor ein. Analoges trifft auf den Anomaliedefektwert für Strukturen aus dem unbebilderten Bereich zu. So werden für jede Struktur aus dem bebilderten Bereich (für jedes Näpfchen) und auch aus dem unbebilderten Bereich (für jeden Defekt, wie Kratzer, Löcher etc.) die Ergebnisse in einen Merkmalsvektor zusammengeführt.

Optional können auch alle Merkmale, mit Vermerk auf deren Ursprung in nur einem Merkmalsvektor zusammengeführt werden. Daraus kann dann eine zielführende Untermenge zur Klassifizierung an eine oder mehrere Support Vector Machine (SVM) übergeben und von dieser bzw. diesen klassifiziert werden.

Nachdem sämtliche Merkmale berechnet und im Merkmalsvektor als Komponenten vermerkt vorliegen, werden diese klassifiziert. Das Ergebnis der Klassifikation liefert eine finale Qualitätsaussage des geprüften Produktes. Als Klassifikator kommt eine Support Vector Machine (SVM) zum Einsatz die sich durch eine hohe Verarbeitungsgeschwindigkeit und guten Ergebnissen auszeichnet.

*Support Vector Machines* sind Verfahren für überwachtes *Machine Learning,* die hauptsächlich für binäre Klassifizierung verwendet werden. Die Trainingsdaten werden im n-dimensionalen Raum geplottet und der Algorithmus versucht, eine Grenze mit dem größtmöglichen Abstand zu der nächsten Stichprobe zu ziehen.

Dabei liefert der verwendete rbf-Kernel (radial basis function) bessere Klassifizierungsergebnisse als ein linearer Kernel. Die beiden weiteren SVM Parameter sind der C und der gamma-Parameter wobei C die Größe der Strafe beschreibt, wenn eine Stichprobe falsch klassifiziert wird und gamma den Einfluss jeder einzelnen Stichprobe umfasst. Die Ergebnisse der Untersuchung ergaben Werte für C von. 1.0 und gamma von 0.8.

Die Eigenschaften der SVM erlaubt die Überführung der Charakteristiken im Merkmalsvektor in höhere Dimensionen (kernel-Trick). In diesem Raum erfolgt die Anpassung einer Hyperebene. Die SVM wurde mit Testdaten so trainiert, dass Werte innerhalb des eingeschlossenen Volumens gut und Werte außerhalb als Fehler gewertet werden. Es hat sich gezeigt, dass mit diesem trainierten SVM-Model, mit Daten aus der realen Messung, sich sehr gute Bewertungen erzielen lassen.

Die Bewertung wird für alle Strukturen in allen Messbildern (bzw. dem einen großen Messbild) durchgeführt.

Wenn alle Strukturen aller Messbilder innerhalb des eingeschlossenen Volumens liegen, ist die Tiefdruckwalze als fehlerfrei anzusehen. Andernfalls ergibt sich aus den Koordinaten der fehlerhaften Struktur der Fehlerort.

Die SVM liefert eine entsprechende Ausgabe, die mindestens "fehlerfrei" oder "fehlerhaft" beinhaltet.

Training der Neuronalen Netze und der Support Vector Machine

Das Training der eingesetzten Neuronalen Netze erfolgt vorzugsweise dreistufig:

1. Training mittels synthetischer Bilder (Abbildungen von Walzenoberflächen) mit Idealformen von Näpfchen (Entfällt für das dritte Neuronale Netz),
2. Training mittels realer Abbildungen von Oberflächen von Tiefdruckzylindern und zugehöriger Identifikation der Objekte in den Abbildungen,
3. Training mittels realer Abbildungen die von einer Support Vector Machine (SVM) kategorisiert wurden.

Das erste und zweite Neuronale Netz wird in einem ersten Trainingsschritt mit Idealformen der jeweiligen Napfformen, die als 2D Referenzformen erzeugt werden, trainiert. Nachfolgend erfolgt in einem zweiten Schritt ein Training mit bekannten Daten (realen Abbildungen) die aus Inspektionen der Oberflächen von Tiefdruckzylindern und Tiefdruckplatten durch menschliche Bearbeiter stammen.

Die Daten zum Training des ersten und zweiten neuronalen Netzes enthalten neben den realen Abbildungen der Oberflächen von Tiefdruckzylindern oder Tiefdruckplatten in dem zweiten Schritt auch Informationen darüber enthielten, ob es sich bei Bildobjekten in den Abbildungen um Näpfchen handelt.

Die Daten zum Training des zweiten neuronalen Netzes enthalten in dem zweiten Schritt neben den Abbildungen der Oberflächen von Tiefdruckzylindern oder Tiefdruckplatten und den Informationen darüber, ob es sich bei Bildobjekten in den Abbildungen um Näpfchen handelt, weiterhin einen Bewertungsparameter zur Schwere eines Fehlers an einem jeweiligen Näpfchen also ob diese Näpfchen als beschädigt oder verwendbar zu bewerten sind.

Für das dritte Neuronale Netz, das die unbebilderten Bereiche auf Fehler durchsuchen soll, entfällt der ersten Schritt. Für die weiteren Schritte wird analog zu den beiden anderen Neuronalen Netzen vorgegangen. Auch hier enthalten die Daten zum Training des dritten neuronalen Netzes in dem zweiten Schritt neben den Abbildungen der Oberflächen von Tiefdruckzylindern oder Tiefdruckplatten auch Informationen darüber, ob es sich bei Bildobjekten in den Trainingsabbildungen um Defekte handelt.

Das dritte Neuronale Netz ist bevorzugt ein PaDiM Netz - A Patch Distribution Modeling and Localization - der Anomaly-Detektion. Das dritte Neuronale Netz wurde mit guten und defekten Bildern trainiert und zeigte eine sehr gute Fehlererkennung.

Die Trainingsschritte können auch ineinander übergehen, indem mit den Idealformen der jeweiligen Napfformen begonnen wird, die sich mathematisch formulieren lassen und als 2D Referenzform (Blueprint) erzeugt werden können. In weiteren Optimierungsläufen werden diese zunehmend mit Daten (Napfwerten) des realen Prozesses erweitert.

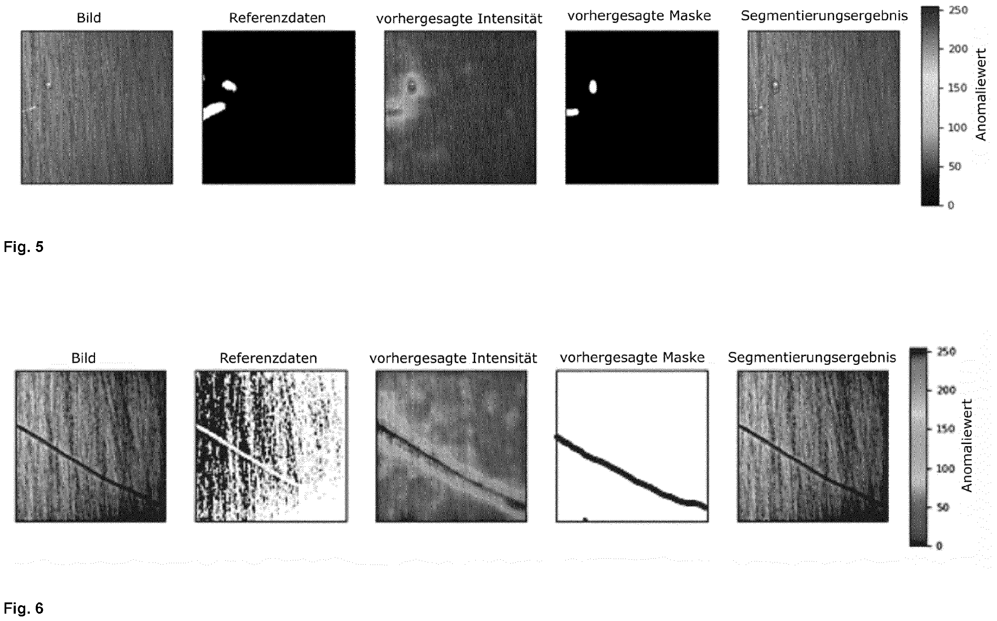

Die Bilder der beiden Bildsequenzen Fig. 5 und Fig. 6 haben folgende Bedeutung, von links nach rechts.

- Eingabe: Image = Originalbild
- Eingabe: GroundTruth = maskierter Fehlerbereich
- Ausgabe, Ergebnis: Predicted heat map, Anomalie in falschfarben
- Ausgabe, Ergebnis: Predicted mask, Maske des Fehlerbereiches
- Ausgabe, Ergebnis: Segmentation result, Markierung der Anomalie

Die Support Vector Machine wird in ihren Parametern zur Klassifizierung festgelegt, indem die Parameter so lange durch menschlichen Eingriff korrigiert werden, bis die Bewertung vorhandener Messbilder durch Menschen und SVM in einem vorgegebenen Maß übereinstimmen.

Die SVM liefert aus der Bewertung des Merkmalsvektors jedes Näpfchens und des Anomaliedefektwertes jedes Defekts und dem einen oder mehreren Messbildern eine Datenbasis für Trainingsdaten zur Verbesserung der Erkennung von Näpfchen durch das erste Neuronale Netz und/oder zur Verbesserung der Erkennung und Bewertung von Näpfchen durch das zweite Neuronale Netz und/oder zur Verbesserung der Erkennung von Defekten durch das dritte neuronale Netz , wobei die Neuronalen Netze in einem zweiten Trainingsschritt mit diesem Trainingsdaten trainiert werden. Insbesondere werden die Trainingsdaten im Rahmen einer menschlichen, auf dem realen Fertigungsprozess basierten gut/schlecht Beurteilung der Näpfchen für den Trainingsprozess der Neuronalen Netze aufbereitet.

<u>Zu den eingesetzten Neuronalen Netzen</u>

Zur Ermittlung des Maßes für die Bildqualität kann ein Algorithmus verwendet werden, der durch ein Verfahren des Maschinenlernens trainiert ist. Als Algorithmus kann ein neuronales Netz, insbesondere ein Convolutional Neural Network, verwendet werden. Algorithmen des Maschinenlernens, insbesondere Convolutional Neural Networks, sind besonders geeignet, um eine Vielzahl von Bildeigenschaften in verschiedenen Auflösungsstufen zu erkennen und zu berücksichtigen. Im Vergleich zu bekannten Bildqualitätsmaßen kann ein Algorithmus des Maschinenlernens eine Vielzahl geeigneter Bildeigenschaften erlernen und bestmöglich kombinieren.

Der Algorithmus kann als Eingangsdaten bekannte, ideal generierte, synthetische Bilddaten verarbeiten. Es ist jedoch auch möglich diese Eingangsdaten durch reale Bilddaten aus der Praxis anzureichern. Der Algorithmus kann in einer einfachsten Form als Ausgabewert einen einzelnen Skalar ausgeben, welcher das Maß für die Bildqualität ist. Dies ermöglicht, wie im Folgenden genauer erläutert werden wird, ein einfaches Training des Algorithmus und eine einfache Weiterverarbeitung der Ausgangsdaten. Vorteilhaft können jedoch auch Merkmalsvektoren oder Ähnliches ausgegeben werden, um beispielsweise mehrere Dimensionen einer Bildqualität separat zu analysieren

In neuronalen Netzen, insbesondere in Convolutional Neural Networks, können aus den Eingangsdaten in mehreren nacheinander geschalteten Schichten durch Faltung, Anwendung von Aktivierungsfunktionen und Unterabtastung Bildmerkmale extrahiertwerden. Als letzte Schicht kann eine sogenannte "fully connected layer" verwendet werden, um die Bildmerkmale zu einem Skalar zu kombinieren, der das Maß für die Bildqualität ist. Die Funktion von neuronalen Netzen und insbesondere von Convolutional Neural Networks ist im Stand der Technik aus anderen Anwendungsgebieten wohl bekannt und soll daher nicht detailliert beschrieben werden.

Das Training des Algorithmus kann insbesondere durch ein überwachtes Training erfolgen, bei dem einzelne Trainingsdatensätze jeweils Eingangsdaten für den Algorithmus und ein Sollergebnis umfassen. Die Trainingsdatensätze können jeweils zweidimensionale Bilddaten oder Referenz-Templatedaten in mehreren Skalierungen umfassen.

Die zweidimensionalen Bilddaten bzw. Templatedaten können mit einem bekannten Fehlerwerten konstruiert werden. Dies ermöglicht es, ein diesen Fehler beschreibendes Maß als Sollergebnis in den jeweiligen Trainingsdatensatz mitaufzunehmen. Hierzu kann beispielsweise eine Fehlerrückführung verwendet werden. Dies kann manuell, mit entsprechendem Aufwand oder durch eine programmierte Softwarefunktion erfolgen, z.B. um den Verschleiß des Gravurstichels zu simulieren. Diese Funktion liefert als Ergebnis fehlerhafte zweidimensionale Templatedaten die als solche mit dem Attribut "Defekt-Template" in das Netztraining gehen.

Verschiedene Möglichkeiten zum Training von Algorithmen des Maschinenlernens sind im Stand der Technik bekannt und sollen nicht detailliert erläutert werden.

Der Algorithmus kann durch Trainingssätze trainiert sein oder werden, die jeweils Bilddaten (bspw. für defekte Napfformen) und einen Sollwert für das für diese Bilddaten zu ermittelnde Maß der Bildqualität umfassen. Die Bilddaten sind dabei derart aus vorgegebenen Referenzbildern konstruiert, dass bei der Konstruktion ein gemäß einer Modifikationsvorgabe modifizierter Sollwert in Abhängigkeit von der Modifikationsvorgabe ermittelt wird. Hierdurch kann, wie oben erläutert, erreicht werden, dass die zweidimensionalen Bilddaten mit einem bekannten Fehler konstruiert sind und der Trainingsdatensatz ein diesen Fehler beschreibendes Maß umfasst.

Hierbei können zunächst Referenzbilder ermittelt werden, deren Abbildungsgeometrie mit hoher Genauigkeit bekannt ist. Derartige Referenzbilder können beispielsweise ermittelt werden, indem ein bekanntes Objekt, hier Tiefdrucknäpfchen, mit einer hohen Auflösung abgebildet werden, wobei die Erstellung dieser Referenzbilder und der zugehörigen Qualitätswerte durch eine kalibrierte Vorrichtung erfolgen. Die hochgenaue und im Wesentlichen fehlerfreie Aufnahmegeometrie dieser Napfbilder kann anschließend modifiziert werden. Hierbei können für einen Satz von Napfbildern eine Vielzahl von verschiedenen Modifikationen durchgeführt werden. Beispielsweise können für verschiedene Napfbilder gleiche oder verschiedene 2D Kontourdeformation angebracht werden. Anschließend kann bzw. können durch einen rekonstruierten Bilddatensatz bzw. mehrere rekonstruierte Bilddatensätze ein optimierter Trainingsdatensatz erstellt werden.

Da bekannt ist, wie stark die Napfgeometrie modifiziert wurde, kann dieser Trainingsdatensatz als erweiterter Templatedatensatz im neuen Trainingslauf zum Einsatz kommen. Dabei ergeben sich als Resultat neue Grenzen der Gütekriterien im Merkmalsvektor.

Zusammenfassend betrifft die Erfindung somit auch ein Verfahren zum Training eines Algorithmus durch ein Verfahren des Maschinenlernens. Hierbei kann insbesondere ein überwachtes Lernen erfolgen und die Trainingsdatensätze können wie oben beschrieben vorgegeben werden. Die Erfindung betrifft zudem einen durch ein solches Trainingsverfahren trainierten Algorithmus zum Bestimmen eines Maßes für eine Napfqualität von aus Referenzbildern rekonstruierten Bilddaten bzw. als Verfahrensergebnis Parameter eines Algorithmus, die im Rahmen eines solchen Verfahrens des Maschinenlernens ermittelt werden. Zudem betrifft die Erfindung ein computerlesbares Medium, welches den trainierten Algorithmus in Form von einlesbaren und ausführbaren Programmabschnitten speichert bzw. welches im Rahmen des Verfahrens des Maschinenlernens ermittelte Parameter zur Parametrisierung eines solchen Algorithmus speichert.

In dem Verfahren zur Ermittlung von Abweichungen von Sollvorgaben in Näpfchenbildern werden die Messergebnisse der Einzelnäpfchen einem Merkmalsvektor zugeordnet. Dieser kann einem Klassifikator als Eingangsdatensatz dienen, um aus der Summe der Einzelwert ein Gütemaß des Gesamtsatzes der Messergebnisse zu erlangen. Gute Erfahrungen wurden mit dem Einsatz einer Support Vector Machine (SVM) gemacht. Die Support Vector Machine (SVM) ist eine mathematische Methode, die im Umfeld des maschinellen Lernens zum Einsatz kommt. Sie gestattet das Klassifizieren von Objekten und ist vielfältig nutzbar

Die von der Support Vector Machine ermittelten Klassengrenzen sind sogenannte Large Margin Classifier und lassen um die Klassengrenzen herum einen möglichst breiten Bereich frei von Objekten. Die SVM unterstützt sowohl die lineare als auch die nichtlineare Klassifizierung. Für die nicht-lineare Klassifizierung kommt der sogenannte Kernel-Trick zum Einsatz, der den Objektbereich zur Abbildung nicht-linearer Trennflächen um zusätzliche Dimensionen (Hyperebenen) erweitert.

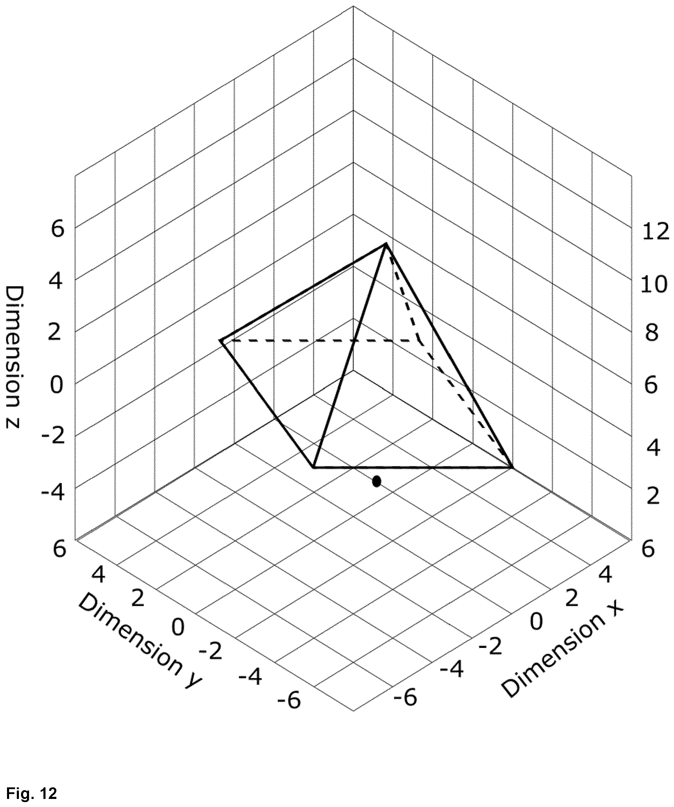

Im Ergebnis der gezeigten Pyramide (siehe Abbildung Fig. 12) wird die Hyperebene im 3D Raum am Ergebnisdatensatz des Merkmalsvektors dargestellt.

Zudem betrifft die Erfindung ein Computerprogramm, welches direkt in eine Speichereinrichtung einer Verarbeitungseinrichtung ladbar ist, mit Programmabschnitten, um alle Schritte des erfindungsgemäßen Verfahrens auszuführen, wenn das Computerprogramm in der Verarbeitungseinrichtung ausgeführt wird.

Zum eingesetzten YOLO Object Detection und dem Trainingsverlauf

YOLO ist ein weit verbreitetes Object-Detection (Objekterkennungs-) Verfahren, das im Jahr 2015 von Redmon et al. (Joseph Redmon u. a. You only look once: Unified, reaktime object detection. Techn. Ber. 2016, S. 779-788. DOI: 10.1109/CVPR.2016.91. arXiv: 1506.02640v5. URL: http://pjreddie.com/yolo/) veröffentlicht und seitdem in mehreren Schritten weiterentwickelt wurde. Die Objekterkennung wird als ein Regressionsproblem betrachtet, bei dem mithilfe eines neuronalen Netzes aus den Pixeln des Eingangsbildes Objekte ermittelt werden. Hierbei wird ein erkanntes Objekt durch eine sogenannte Bounding Box beschrieben, die Position und Größe eindeutig bestimmt. Des Weiteren werden für jedes erkannte Objekt so viele Klassenwahrscheinlichkeiten ermittelt, wie es mögliche Klassen im jeweiligen Anwendungsfall gibt. Für jede Klasse wird ein Klassenwahrscheinlichkeitswert bestimmt - die Summe dieser Werte ergibt Eins. Ein erkanntes Objekt wird der Klasse mit der höchsten Klassenwahrscheinlichkeit zugeordnet. Ein zentrales Ziel von YOLO ist die Echtzeit-Objekterkennung. Aufgrund seiner Eigenschaften als One-Stage Object Detector wird für den gesamten Prozess der Objekterkennung lediglich ein neuronales Netz verwendet, das pro Bild durchlaufen wird - das Bild wird dabei nur einmal betrachtet (You Only Look Once). Das bewirkt, dass YOLO end-to-end nach seiner Leistung in der Objekterkennung optimiert werden kann. Im Gegensatz dazu kann die Gruppe der Two-Stage Object Detectors genannt werden, zu denen unter anderem die Methoden Region Based Convolutional Neural Network (RCNN) (Ross Girshick u. a. Rich feature hierarchies for accurate object detection and semantic segmentation Tech report (v5). Techn. Ber. arXiv: 1311.2524v5), Fast RCNN (Ross Girshick. Fast R-CNN. Techn. Ber. arXiv: 1504.08083v2. URL: https://github.com/rbgirshick/) sowie Faster RCNN (Shaoqing Ren u. a. Faster R-CNN: Towards Real-Time Object Detection with Region Proposal Networks. Techn. Ber. 6. 2017, S. 1137-1149. DOI: 10.1109/TPAMI.2016.2577031. arXiv: 1506.01497) gehören. Vereinfacht erstellen Two-Stage Methoden in einem ersten Schritt sogenannte Region-Proposals, also Vorschläge für Bereiche, in denen sich Objekte befinden könnten. In einem zweiten Schritt werden diese Regionen verwendet und der Inhalt als Klassifikationsproblem betrachtet, d.h. die Klasse des abgebildeten Objekts ermittelt (Ross Girshick u. a. Rich feature hierarchies for accurate object detection and semantic segmentation Tech report (v5). Techn. Ber. arXiv: 1311.2524v5).

Da Convolutional Neural Networks Stand der Technik und aus anderen Anwendungsgebieten bekannt sind erübrigt sich für den Fachmann hier eine nähere Beschreibung.

Der Trainingsdatensatz umfasst ca. 2000 Bilder jeweils für geschlossenen Napf-Templates als auch mit offenen Napf-Templates in unterschiedlichen Größen. Die gewählten Template-Bildgrößen orientierten sich an den Dimensionen der realen Tiefdruck-Napf Form.

Die YOLOV4 Konfigurationsparameter wurden dem Trainingsdatensatz der Templatebilder und der Aufgabenstellung entsprechend gewählt, um ein qualitativ hochwertiges trainiertes Netz zu generieren. Es wurde eine Bildgröße von 416x416 Pixel gewählt mit Scale_x_y = 1.2, jitter = 0.3, momentum = 0.949 und einem exposure = 1.5.

Um die Trainingsdauer zu optimieren, wurde das YOLOV4 Training mit Unterstützung von GPU Prozessoren durchgeführt. Eine GPU ist ein Grafikprozessor - auf Englisch Graphics Processing Unit (GPU) ein Computerchip, der mathematische Berechnungen besonders schnell durchführt und die CPU (Central Processing Unit, "Hauptprozessor") entlastet bzw. neuronale Netze für KI-Anwendungen (künstliche Intelligenz) trainieren kann.

Es konnte erreicht werden, dass mit GPU-Unterstützung sich die Trainingszeit um den Faktor fünf bis acht verringert.

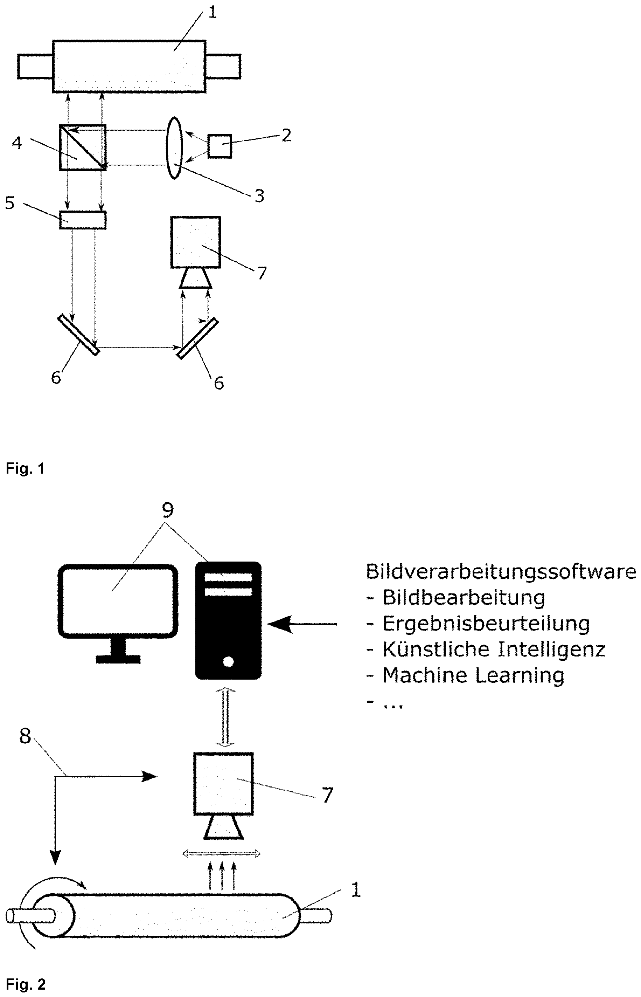

Die Eignung eines CNN Netzes für den beschriebenen Einsatzfall wurde durch den positiven Optimierungsverlauf in der Grafik der Loss Funktion bestätigt. Als Output des letzten CNN Layers entsteht hier ein Tensor in der Form (S,S,(Bx5+C)), dessen Inhalt die Prediction des Netzes für ein Eingangsbild darstellt und einen Wert von mehr als 95% erreichte. Letztendlich erhält man während des Trainingslaufes, der durchaus einge Tage, je nach PC Power, dauern kann, die Optimierungsgrafik einer Loss Funktion. Entsprechende Abbildungen finden sich beispielhaft unter https://www.researchgate.net/figure/Improved-YOLOv4-training-loss-function-curve_fig1_350756829.

Bevorzugte Weiterbildungen der Erfindung ergeben sich aus den Kombinationen der Ansprüche oder einzelner Merkmale davon.

Die Erfindung soll nachfolgend eingehender anhand eines Ausführungsbeispiels und der zugehörigen Figuren erläutert werden. Das Ausführungsbeispiel soll dabei die Erfindung erläutern ohne diese zu beschränken.

**Figuren**

**Fig. 1** zeigt schematisch den Aufbau der optischen Inspektionseinheit, mit der das Messbild bzw. die mehreren Messbilder von der Oberfläche des Tiefdruckzylinders scannend erfasst werden. Die Pfeile deuten den Strahlengang an.

**Fig. 2** erläutert das scannende Erfassen der Messbilder näher.

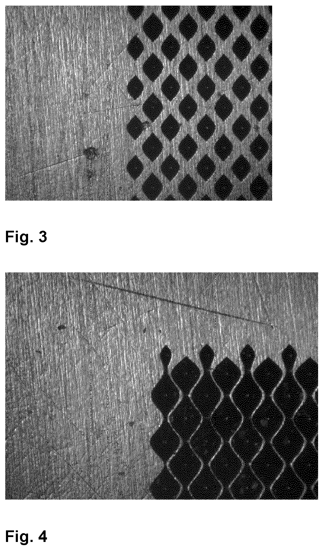

**Fig. 3** zeigt die fotografische Aufnahme eines Bereichs mit geschlossenen Näpfchen (closed cells).

**Fig. 4** zeigt die fotografische Aufnahme eines Bereichs mit offenen Näpfchen (open cells).

**Fig. 5** zeigt zum Training des dritten Neuronalen Netzes genutzte Beispieldaten, hier den Oberflächendefekt "Loch und kleiner Kratzer" sowie die Ausgabedaten des dritten Neuronalen Netzes.

**Fig. 6** zeigt zum Training des dritten Neuronalen Netzes genutzte Beispieldaten, hier den Oberflächendefekt "markanter Kratzer" sowie die Ausgabedaten des dritten Neuronalen Netzes.

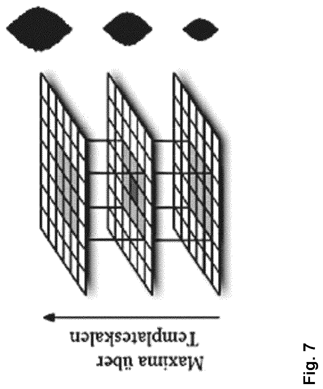

**Fig. 7** erläutert schematisch das Verfahren des Template-Matchings mit vorgegebenen Mustern (Templates) unterschiedlicher Größe.

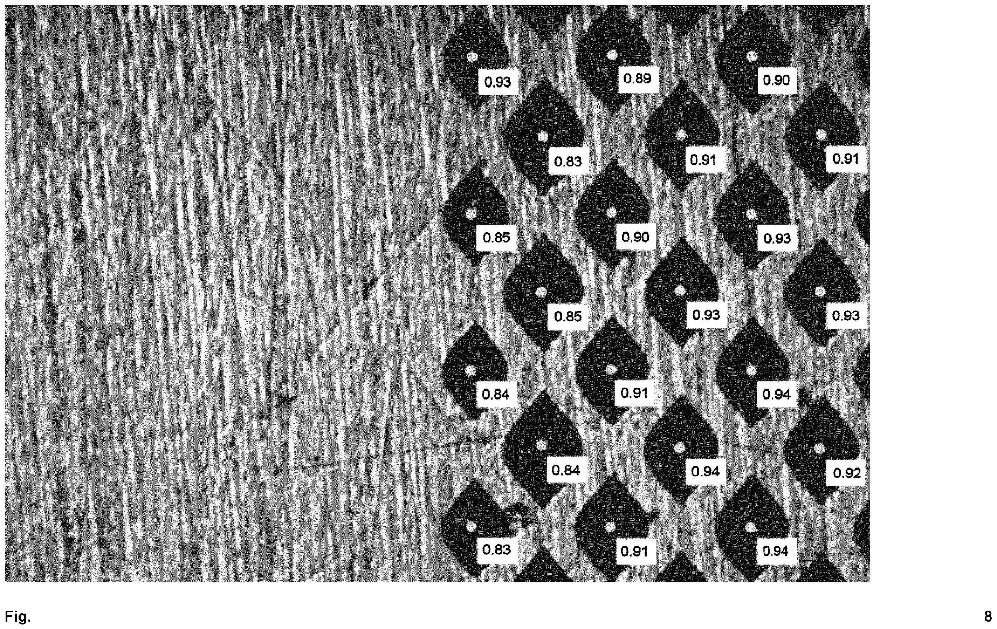

**Fig. 8** zeigt beispielhaft das Ergebnis der normierten Kreuzkorrelation für geschlossene Näpfchen sowie die danach bestimmten geometrischen Schwerpunkte. Genutzt wurde dabei ein Template von 183 x 128 Pixeln.

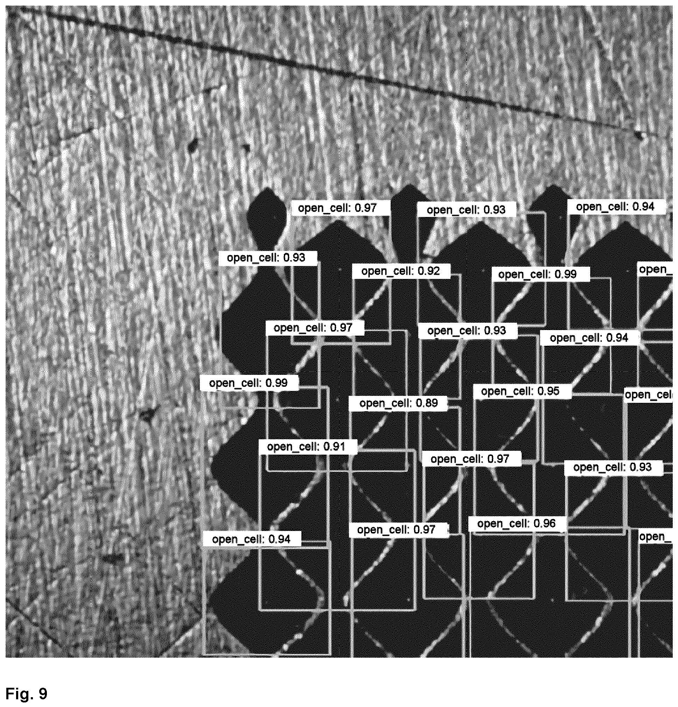

**Fig. 9** zeigt beispielhaft das Ergebnis der normierten Kreuzkorrelation für offene Näpfchen

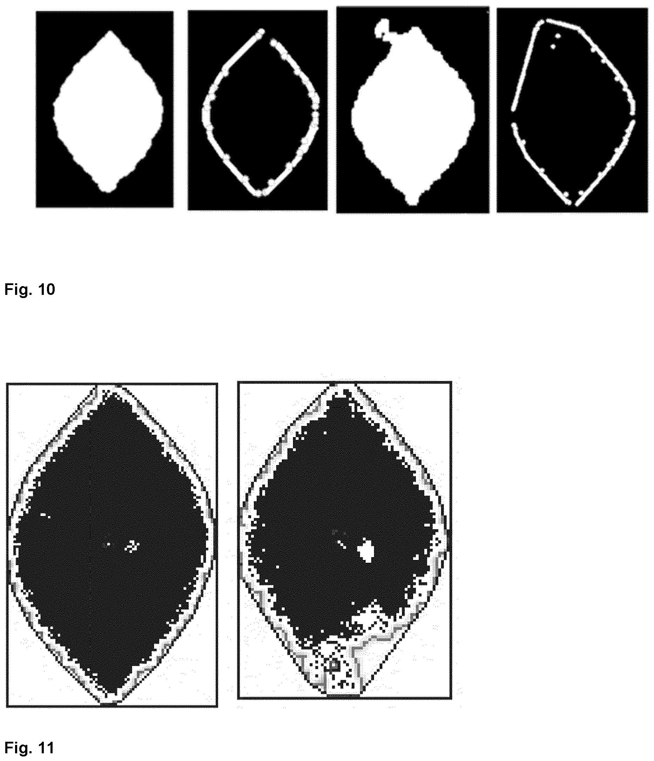

**Fig. 10** zeigt beispielhaft die Ergebnisse für die Beurteilung der Näpfchenkontur mittels "convexity defects".

**Fig. 11** zeigt ein Beispiel für den Einsatz des "convex hull"-Verfahrens, bei dem die Konvexität der umhüllenden Kurve betrachtet wird.

**Fig. 12** zeigt schematisch den Bewertungsraum einer Supportvektormaschine. Strukturen, deren Werte innerhalb der dargestellten Pyramide liegen gelten als fehlerfrei, Strukturen deren Werte außerhalb liegen als fehlerhaft.

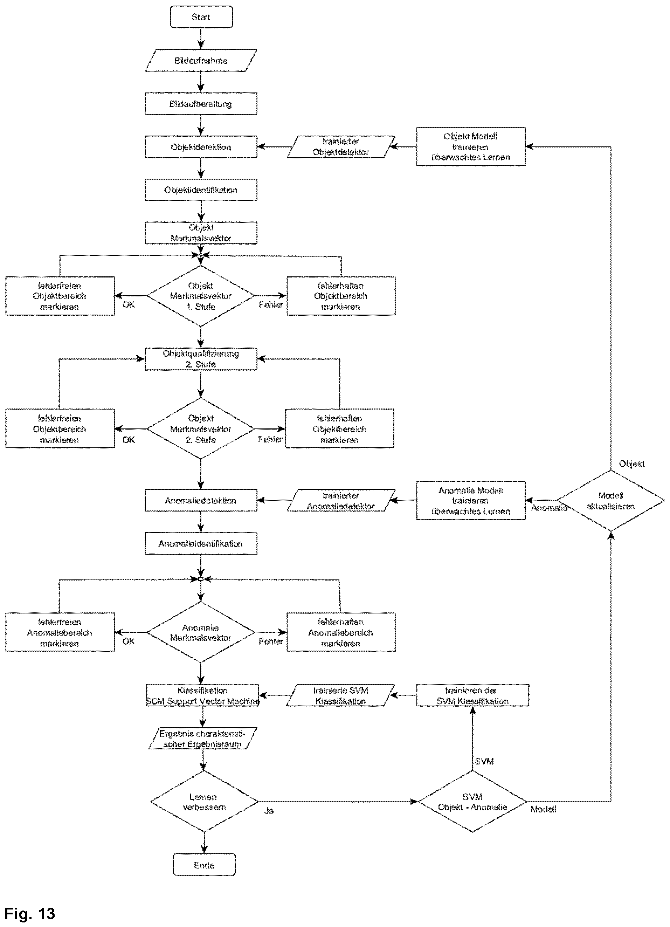

**Fig. 13** zeigt den Ablauf des erfindungsgemäßen Verfahrens. Der Zweig "improve learning" -> "yes" wird nur in der Trainingsphase der Neuronalen Netze bzw. der SVM abgearbeitet.

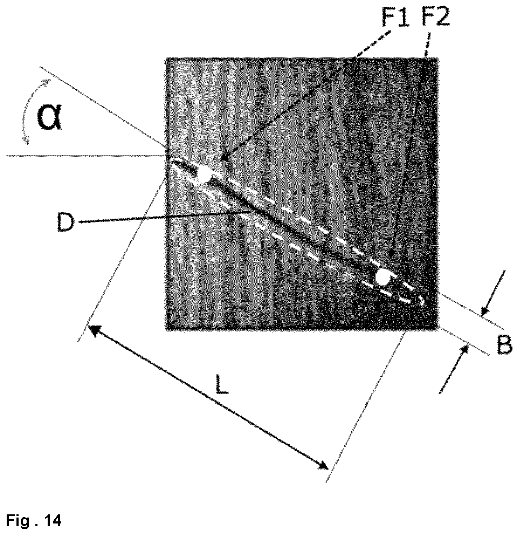

**Fig. 14** erläutert die Ermittlung des Anomaliedefektwertes und benennt die Parameter einer gefitteten Ellipse um einen Defekt, hier einen Kratzer, die in die Berechnungsformel des Anomaliefefektwertes eingesetzt werden. Mit: Adw.-Anomaliedefektwert, L- Länge, B- Breite, A-Fläche, F1, F2- Scheitelpunkte der einhüllenden Ellipse, Amax- empirischer Wert, $\alpha$-Winkel zur Zylinderachse.

**Ausführungsbeispiel**

Das hier beschriebene Verfahren umfasst die optische Inspektion von Tiefdruckzylindern (Druckzylindern) im Mikrometerbereich, einem mehrstufigen vollautomatischen Verfahren der Bildaufnahme, Bildaufbereitung und Qualitätsbeurteilung. Hierbei kommen intelligente und selbstlernende Bausteine des Software-Engineerings u.a. der KI (Künstlichen Intelligenz) und des Machine Learnings zum Einsatz.

Die Bildaufnahme erfolgt durch einen optischen Scan der Zylinderoberfläche. Hierbei wird typischerweise das zu prüfende Werkstück, der Tiefdruckzylinder (Tiefdruckwalze) gedreht und die optische Bilderfassungseinheit achsparallel über die gesamte Tiefdruckzylinderbreite verfahren. Alternativ könnte der Prüfling auch festmontiert sein und eine bewegliche Bilderfassungseinheit auf einem x-y Schlitten eine 2D-Fläche abscannen, was im Rahmen der Inspektion von rechteckigen Testplatten z.B. einer Ballardhaut zum Einsatz kommen würde. Die Zylinderhalterung in einer Rotationseinheit erfolgt typischerweise durch Spanneinheiten an den jeweiligen Achsenden. Alternativ ist eine Lagerung auf sich drehenden Laufrollen möglich. Hierbei würde der Druckzylinder auf dessen Oberfläche in den Laufrollen angetrieben und geführt werden. Darüber hinaus sind weitere Ausführungsvarianten denkbar deren Anordnung entsprechend dem Einsatzumfeld zu wählen sind. Dies umfasst auch die Inlineinspektion in bestehende Fertigungsmaschinen z.B. der Kupfer Oberflächenbearbeitung des Tiefdruckzylinders nach dem "Finishing"-Prozess als finaler Qualitätsprüfschritt. Eine Inlineeingangsinspektion in einem der nachfolgenden Prozessschritte u.a. des Bebilderungsprozesses stellt eine weitere Inlineoption dar.

Zur Positionsbestimmung des aufgenommenen Messbildes auf der Zylinderoberfläche wird über einen Drehwinkelencoder an der Antriebseinheit oder einer alternativen Anbringung, die jeweilige Winkelposition abgegriffen. Zusammen mit der zweiten Ortsinformation der achsparallelen Lineareinheit kann somit jedes aufgenommene Kamerabild im 2D Raum (abgewickelte Zylinderoberfläche) verortet werden. Anschließend werden mehrere Einzelbilder zu einem Messbild mittels "stitching" (Zusammenfügen der Einzelbilder) zusammengefasst.

Der gesamte Zylinder Ein- und Ausbau, als auch das Zylinderhandling kann innerhalb einer bestehenden Inspektionseinheit oder automatisierten Prozesslinie eigenständig erfolgen.

In diesem Zusammenhang können auch, nach Abschluss des Rüstprozesses, die mechanischen Referenzpunkte des Druckzylinders automatisch erfasst werden u.a. die Zylinderbreite, dessen Durchmesser als auch die automatische Referenzpunktpositionierung der Bildaufnahmeeinheit mittels Autofocus.

Zur Bilderfassung kommt eine Optische Inspektionseinheit zum Einsatz:

- Kamera, Objektiv und koaxialer Beleuchtungskomponente
- Bildaufnahme und Auswertung: Mittels Kamerasystem und Bilderfassungssoftware wird die gesamte Zylinderoberfläche abgescannt und anschließend einer speziell dafür entwickelten Software-Nachverarbeitung zugeführt.

Die Komponenten der optischen Bilderfassungseinheit beinhaltet eine Flächenkamera mit Objektiv, Lichtquelle mit Kondensor Linse sowie ein Umlenkspiegel für eine koaxiale Beleuchtung. Die zu prüfenden Oberflächenzustände der Tiefdruckzylinder sind einerseits der unbebilderte Zustand einer Kupferoberfläche, die anschließend bebildert und verchromt wird. Im unbebilderten Zustand erscheint die Kupferoberfläche metallisch, matt glänzend, im bebilderten Zustand, durch die Verchromung der Oberfläche spiegelnd, stark glänzend. Beide Oberflächen enthalten eine gewünscht angebrachte Oberflächenrauheit. Entsprechend den physikalischen Gesetzmäßigkeiten erhöht sich bei kurzwelligerem Licht die Detailschärfe der Abbildung, weshalb als Lichtquelle eine gepulste LED im blauen Frequenzbereich von 450 nm verwendet wird.

Um eine qualitative Aussage hinsichtlich kritischer Oberflächendefekte im Mikrometerbereich treffen zu können, ist eine entsprechend hohe Auflösung des Messfeldes notwendig. Hierzu sind Messfeldgröße, Objektiv und Kamera aufeinander abzustimmen. Hierbei kann der notwendige Abbildungsmaßstab, d.h. das Verhältnis von Objektgröße zu Bildgröße, über eine Kameraeinstellung (Binning...) alternativ durch ein Zoom des Objektives erreicht werden.

Diese Anordnung erlaubt das zu prüfende Objekt in zwei oder mehreren optischen Auflösungen vollautomatisch zu analysieren. Eine der Defektgröße angepasste optimale Messauflösung wirkt sich positiv auf die große Datenmenge aus und reduziert diese erheblich.

Bei der Erfassung der Oberfläche eines Tiefdruckzylinders (30 cm Zylinderdurchmesser, 100 cm Ballenlänge) mit einer zu inspizierenden Oberfläche von ca. 10000 cm$^2$ entstehen ca. 150000 Bilder mit einer Auflösung von 5120 x 5120 Pixeln bei einer Objektauflösung von $20\mu$m.

Die Bilder werden abgespeichert und stellen ein Datenvolumen pro Bild von ca. 190 MB dar.

Nach dem softwaregestützten Zusammenfügen der Einzelbilder entsteht ein Messbild von 3.41 Terrabyte. Das Zusammenfügen des Messbildes läuft, soweit möglich, parallel zur Bildaufnahme, um eine Optimierung der Messdauer zu erreichen. Das Messbild wird zur weiteren Verarbeitung abgespeichert.

Nunmehr erfolgt das Erkennen von Näpfchen im Messbild. Dazu wird das Messbild mit bekannten Bildverarbeitungsalgorithmen nach Strukturen (Elementen) untersucht. Hier kommt der Schwellwertalgorithmus zum Einsatz.

Beim Auffinden einer Struktur auf der Oberfläche wird geprüft, ob es sich um ein Näpfchen handelt.

Dazu wird der Schwellwertalgorithmus verwendet. Als Schwellwert wurde ein Wert von 0,8 festgelegt, um den sich eine Struktur vom unbearbeiteten bzw. unbeschädigten Untergrund (im Messbild der Hintergrund) abheben muss.

Wenn eine Struktur erkannt wurde, wird mit dem Verfahren des Template-Matching geprüft, ob es sich um ein offenes Näpfchen handelt.

Der Test auf offene Näpfchen erfolgt mit 10 unterschiedlich großen Templates für geschlossene Näpfchen unter Einsatz der normalisierten Kreuzkorrelation. Sollten alle Templates unter dem vorgegebenen Korrelationswert von 0,8 bleiben, wird die aufgefundene Struktur mit Templates für offene Näpfchen untersucht. Hier beträgt der Schwellwert der Korrelation ebenfalls 0,8. Der Korrelationswert bedeutet hierbei, dass Näpfchen, die den Korrelationswert überschreiten hinreichend mit dem jeweiligen Template übereinstimmen.

Wenn die aufgefundene Struktur weder ein geschlossenes noch ein offenes Näpfchen ist, handelt es sich offenbar um einen sonstigen Oberflächendefekt. Daher wird diese Struktur mit der Vorgehensweise für nichtbebilderte Bereiche behandelt.

Wenn es sich bei der Struktur um ein offenes oder geschlossenes Näpfchen handelt, wird anschließend der Mittelpunkt (geometrischer Schwerpunkt) des Näpfchens bestimmt. Dies erfolgt mit bekannten Algorithmen aus dem Stand der Technik.

Nach dem Auffinden des geometrischen Schwerpunktes erfolgt die Beurteilung der Näpfchenform.

Im vorliegenden Fall werden die folgenden Verfahren kombiniert:

1. Flächenfaktor - Maß der Flächenverhältnisse als auch Länge, Breite
2. Convexity Defects nach https://theailearner.com/2020/11/09/convexity-defectsopencv/
3. Convex Hull nach https://de.wikipedia.org/wiki/Konvexe_Hülle
4. Match Shapes using HU Moments https://de.wikipedia.org/wiki/Konvexe_Hülle
5. TemplateDistanceRefAngle: Konturabstände "Konturpolygon" und Referenztemplate an unterschiedlichen Winkelungen z.B. 0, 45 Grad, 90 Grad usw. - siehe oben
6. Prüfung auf Stegbruch und Stegdeformationen bei offenen Näpfchen
7. Fraktale Dimension - siehe oben

Die Verfahren liefern Werte für die Abweichung von vorgegebenen Sollwerten. Diese Abweichung wird hier in Prozent ausgedrückt. Weiterhin gehen die Ergebnisse der Verfahren unterschiedlich stark in das Endergebnis ein (siehe Tabelle 1).

Anschließend wird das Messbild an das dritte Neuronale Netz übergeben. Hierbei handelt es sich um ein Netzwerk auf Basis des PaDiM-Frameworks. Dieses verwendet ein vortrainiertes Convolutional Neural Network. Das dritte Neuronale Netz erkennt Strukturen, die keine Näpfchen sind und bewertet diese als Fehler (Defekt).

Das dritte Neuronale Netz liefert als Ergebnis einen Anomaliedefektwert als Quantifizierung des Fehlerausmaßes. Dieser wird berechnet, indem auf die von PaDiM gefundene Defektkontur ein "Ellipse Fitting" unter Verwendung von OpenCV angewandt wird (entsprechend Gleichung (1)), mit dem Ergebnis, dass die Defektfläche mit einem Rechteck und einem Richtungsvektor ausgewiesen wird. Sowohl Fläche, maximaler Abstand zweier Punkte oder Richtungsvektor sind hier als Gütemaß geeignet.

Die Ergebnisse der Napfbewertungen und der Anomaliedefektwert gehen in den Merkmalsvektor mit den in der folgenden Tabelle angegebenen Gewichtungen ein:

Tab. 1: Elemente des Merkmalsvektors sowie Gewichte des Eingehens in diesen und Toleranzen der Einzelwerte

| Nr. | Verfahren | Ergebnisgewichtung | Toleranz/Schwellwert |
|---|---|---|---|
| 1 | Flächenabweichung/Flächenfaktor | 15% | 10% |
| 2 | Convexity defects | 25% | 15% |
| 3 | Convex Hull | 10% | 15% |
| 4 | Match Shapes using HU Moments(HU-Momente) | 5% | 10% |
| 5 | TemplateDistanceRefAngles | 35% | 5% |
| 6 | Fraktale Dimension | 10% | 5% |
| | Summe | 100% | |
| | | | |
| 7 | Abweichung einer Näpfchenposition | 100% | 10% |
| 8 | Abweichung im Näpfchenmuster | 100% | 20% |
| | | | |
| 9 | Anomaliedefektwert | 100% | 25% |

Wenn der Merkmalsvektor vollständig vorliegt, wird dieser mittels einer Support Vector Machine klassifiziert. Die SVM betrachtet einen Raum einer Dimension, die gleich der Anzahl der Elemente des Merkmalsvektors ist Innerhalb dieses Raums definiert der Merkmalsvektor einen Punkt. Aufgrund von Erfahrungswerten und menschlichem Wissen wurde in diesem Raum ein Teilraum definiert. Wenn der zu einer Struktur gehörige Punkt innerhalb dieses Teilraums liegt, ist die Struktur als in Ordnung bzw. unkritisch anzusehen. Wenn alle Strukturen aller Messbilder innerhalb dieses Teilraums liegen, ist die Tiefdruckwalze als fehlerfrei anzusehen. Andernfalls ergibt sich aus den Koordinaten der fehlerhaften Struktur der Fehlerort.

Die SVM liefert eine entsprechende Ausgabe, die mindestens "fehlerfrei" oder "fehlerhaft" beinhaltet.

**Bezugszeichen**

| 1 | Druckwalze |
|---|---|
| 2 | blaue LED |
| 3 | Linse |
| 4 | Strahlteiler |
| 5 | Objektiv |
| 6 | Umlenkspiegel |
| 7 | Kamera |
| 8 | Resolver zur Erfassung der Position des Bildes auf der Walze |
| 9 | Datenverarbeitungsanlage |
| D | Defekt |
| B | Breite des Defektes |
| L | Länge des Defektes |
| A | Fläche des Defektes |
| Amax | empirischer Wert aus Messungen |
| F1, F2 | Scheitelpunkte der einhüllenden Ellipse |
| $\alpha$ | Winkel zur Zylinderachse des Tiefdruckzylinders |

**Zitierte Nichtpatentliteratur**

Ming-Kuei Hu, "Visual Pattern Recognition by Moment Invariants", doi:10.1109/TIT.1962.1057692

**EP 4 306 322 B1**

Shaoqing Ren u. a. "Faster R-CNN: Towards Real-Time Object Detection with Region Proposal Networks". In: CoRR abs/1506.01497 (2016). arXiv: 1506.01497. url: http://arxiv.org/abs/1506.01497

Tsung-Yi Lin u. a. "Focal Loss for Dense Object Detection". In: CoRR abs/1708.02002 (2017). arXiv: 1708.02002. url: http://arxiv.org/abs/1708.02002

Alexey Bochkovskiy, Chien-Yao Wang und Hong-Yuan Mark Liao. "YOLOv4: Optimal Speed and Accuracy of Object Detection". In: CoRR abs/2004.10934 (2020). arXiv: 2004.10934. url: https://arxiv.org/abs/2004.10934

https://de.wikipedia.su/wiki/Fraktale_Dimension#Boxcounting-Dimension (Stand, 04.04.2022)

https://theailearner.com/2020/11/09/convexity-defects-opencv/

https://de.wikipedia.org/wiki/Konvexe_Hülle

https://cvexplained.wordpress.com/2020/07/21/10-4-hu-moments/

https://www.researchgate.net/figure/Improved-YOLOv4-training-loss-function-curve_fig1_350756829

Ross Girshick. Fast R-CNN. Techn. Ber. arXiv: 1504.08083v2. URL: https://gith ub.com/rbgirshick/.

Ross Girshick u. a. Rich feature hierarchies for accurate object detection and semantic segmentation Tech report (v5). Techn. Ber. arXiv: 1311.2524v5.

Joseph Redmon u. a. You only look once: Unified, reaktime object detection. Techn. Ber. 2016, S. 779-788. DOI: 10.1109/CVPR.2016.91. arXiv: 1506.02640v5. URL: http://pjreddie.com/yolo/.

Shaoqing Ren u. a. Faster R-CNN: Towards Real-Time Object Detection with Region Proposal Networks. Techn. Ber. 6. 2017, S. 1137-1149. DOI: 10.1109/TPAMI.2016 .2577031. arXiv: 1506.01497.

Thomas Defard u. a. "PaDiM: a Patch DistributionModeling Framework for Anomaly Detection and Localization. In: CoRR abs/2011.08785 (2020). arXiv: 2011.08785. URL: https://arxiv.org/abs/2011.08785.

https://github.com/xiahaifeng1995/PaDiM-Anomaly-Detection-Localization-master

**Patentansprüche**

1. Verfahren zur optischen Prüfung der Oberflächen von Tiefdruckzylindern und Tiefdruckplatten, aufweisend mindestens die folgenden Schritte:

    a) Tiefdruckzylinder oder Tiefdruckplatte in eine Inspektionsvorrichtung einbringen,
    b) Scannende optische Erfassung der Oberfläche des Tiefdruckzylinders oder der Tiefdruckplatte mittels einer Bilderfassungseinheit in einem oder mehreren Messbildern sowie Erfassung der Position der Messbilder relativ zur Oberfläche des Tiefdruckzylinders bzw. der Tiefdruckplatte,
    c) Erkennung von Näpfchen durch Abrastern des ersten Messbildes,
    d) Vergleich einer Reihe vorgegebener Eigenschaften der Näpfchen mit den diesen Eigenschaften zugeordneten vorgegebenen Sollwerten und Aufnahme der Abweichung jeder Eigenschaft vom jeweiligen Sollwert als Wert in einen Merkmalsvektor,
    e) Erkennung von Defekten in den Bereichen des ersten Messbildes, in denen keine Näpfchen erkannt wurden,
    f) Bestimmung eines Anomaliedefektwertes eines erkannten Defekts,
    g) Klassifizierung des Merkmalsvektors jedes Näpfchens und des Anomaliedefektwertes jedes Defekts anhand vorgegebener Ergebnisgewichtung und zulässiger Toleranzwerte jeder Eigenschaft des Merkmalsvektors mittels einer vortrainierten Supportvektormaschine (SVM) und,
    h) Wiederholung der Schritte c) bis g) für jedes weitere Messbild,
    i) Ausgabe einer Bewertung des Tiefdruckzylinders oder der Tiefdruckplatte, wobei die Bewertung mindestens die Angaben "fehlerfrei" oder "fehlerhaft" beinhaltet.

**17**

2. Verfahren zur optischen Prüfung der Oberflächen von Tiefdruckzylindern und Tiefdruckplatten nach Anspruch 1, **dadurch gekennzeichnet, dass** nach Schritt c) ein Zusammenfügen eines Gesamtbildes der Oberfläche des Tiefdruckzylinders oder der Tiefdruckplatte aus den Messbildern erfolgt und das Verfahren mit diesem zusammengefügten Gesamtbild als Messbild durchgeführt wird.

3. Verfahren zur optischen Prüfung der Oberflächen von Tiefdruckzylindern und Tiefdruckplatten nach Anspruch 1 oder 2, **dadurch gekennzeichnet, dass** Schritt c) mittels

   i. Mustererkennung (Template Matching) mit Bestimmung von geometrischem Schwerpunkt und Kontur des erkannten Näpfchens, und/oder
   ii. eines ersten vortrainierten neuronalen Netzes, das die Näpfchen erkennt und markiert sowie nachfolgender Bestimmung von geometrischem Schwerpunkt und Kontur des erkannten Näpfchens,
   erfolgt.

4. Verfahren zur optischen Prüfung der Oberflächen von Tiefdruckzylindern und Tiefdruckplatten nach einem der vorhergehenden Ansprüche, **dadurch gekennzeichnet, dass** die Schritte c) und d) mittels eines zweiten vortrainierten neuronalen Netzes erfolgen, das die Näpfchen erkennt und bewertet und einen Vertrauenswert als Wert in den Merkmalsvektor überträgt.

5. Verfahren nach einem der vorhergehenden Ansprüche, **dadurch gekennzeichnet, dass** Schritt e) mittels

   i. Schwellwertverfahren zur Objekterkennung, und/oder
   ii. einem vortrainierten dritten neuronalen Netz
   erfolgt.

6. Verfahren zur optischen Prüfung der Oberflächen von Tiefdruckzylindern und Tiefdruckplatten nach einem der vorhergehenden Ansprüche, **dadurch gekennzeichnet, dass** aufgrund der bekannten Bilder, die auf dem Tiefdruckzylinder bzw. der Tiefdruckplatte eingraviert sind, geprüft wird, ob eine Abweichung einer Näpfchenposition von den Bilddaten vorliegt, wobei ein Wert ermittelt wird, der in den Merkmalsvektor eingeht.

7. Verfahren zur optischen Prüfung der Oberflächen von Tiefdruckzylindern und Tiefdruckplatten nach einem der vorhergehenden Ansprüche, **dadurch gekennzeichnet, dass** aus der Abweichung der Position einzelner Näpfchen von dem regelmäßigen Muster, das sich aus der Vielzahl der Näpfchen ergibt, ein Wert ermittelt wird, der in den Merkmalsvektor eingeht.

8. Verfahren zur optischen Prüfung der Oberflächen von Tiefdruckzylindern und Tiefdruckplatten nach einem der vorhergehenden Ansprüche, **dadurch gekennzeichnet, dass** die Messbilder mit überlappenden Bereichen aufgenommen werden.

9. Verfahren zur optischen Prüfung der Oberflächen von Tiefdruckzylindern und Tiefdruckplatten nach Anspruch 3, **dadurch gekennzeichnet, dass** die Mustererkennung (Template Matching) auf Basis der normalisierten Kreuzkorrelation erfolgt.

10. Verfahren zur optischen Prüfung der Oberflächen von Tiefdruckzylindern und Tiefdruckplatten nach einem der vorhergehenden Ansprüche, **dadurch gekennzeichnet, dass** die Reihe der vorgegebenen Eigenschaften einige oder alle der folgenden Eigenschaften beinhaltet: Flächengrößenabweichung, Konvexitätsfehler, Konvexitätshülle, Formübereinstimmungen mittels HU-Momenten, Konturabstände, Fraktale Dimension sowie einem Verfahren zur Bewertung der Konturabweichung.

11. Verfahren zur optischen Prüfung der Oberflächen von Tiefdruckzylindern und Tiefdruckplatten nach Anspruch 10, **dadurch gekennzeichnet, dass** das Verfahren zur Bewertung der Konturabweichung beinhaltet, die Abweichung der gefundenen Kontur eines Näpfchens von der idealen Kontur des Näpfchens an mehreren, vorzugsweise 8 auf dem Umfang des gefundenen Näpfchens verteilten Punkten zu ermitteln und in den Merkmalsvektor aufzunehmen.

12. Verfahren zur optischen Prüfung der Oberflächen von Tiefdruckzylindern und Tiefdruckplatten nach einem der Ansprüche 3 bis 5, **dadurch gekennzeichnet, dass** es sich bei dem ersten und dem zweiten Neuronalen Netz jeweils um ein YOLOv4-Netz handelt.

13. Verfahren zur optischen Prüfung der Oberflächen von Tiefdruckzylindern und Tiefdruckplatten nach einem der Ansprüche 3 bis 5, **dadurch gekennzeichnet, dass** es sich bei dem dritten Neuronalen Netz um ein Convolutional Neuronal Network unter Einsatz eines Patch Distribution Modelling Framework handelt.

14. Verfahren zur optischen Prüfung der Oberflächen von Tiefdruckzylindern und Tiefdruckplatten nach einem der vorhergehenden Ansprüche, **dadurch gekennzeichnet, dass** der Anomaliedefektwert unter Einbeziehung einiger oder aller der folgenden Eigenschaften des Defekts ermittelt wird: der Fläche, den Ausdehnungen in mindestens zwei voneinander abweichenden Richtungen, dem Verlaufswinkel.

15. Verfahren zur optischen Prüfung der Oberflächen von Tiefdruckzylindern und Tiefdruckplatten nach einem der vorhergehenden Ansprüche, **dadurch gekennzeichnet, dass** die SVM in ihren Parametern zur Klassifizierung festgelegt wird, indem die Parameter so lange durch menschlichen Eingriff korrigiert werden, bis die Bewertung vorhandener Messbilder durch Mensch und SVM in einem vorgegebenen Maß übereinstimmen.

16. Verfahren zur optischen Prüfung der Oberflächen von Tiefdruckzylindern und Tiefdruckplatten nach den Ansprüchen 3 bis 5, **dadurch gekennzeichnet, dass** die Neuronalen Netze in einem ersten Trainingsschritt mit Idealformen der jeweiligen Napfformen, die als 2D Referenzformen erzeugt werden, trainiert sind, nachfolgend erfolgt in einem zweiten Schritt ein Training mit bekannten Daten die aus Inspektionen der Oberflächen von Tiefdruckzylindern oder Tiefdruckplatten stammen.

17. Verfahren nach Anspruch 16, **dadurch gekennzeichnet, dass** die Daten zum Training des ersten und zweiten neuronalen Netzes im zweiten Schritt neben den Abbildungen der Oberflächen von Tiefdruckzylindern oder Tiefdruckplatten auch Informationen darüber enthielten, ob es sich bei Bildobjekten in den Abbildungen um Näpfchen handelt.

18. Verfahren nach Anspruch 16, **dadurch gekennzeichnet, dass** die Daten zum Training des zweiten neuronalen Netzes im zweiten Schritt neben den Abbildungen der Oberflächen von Tiefdruckzylindern oder Tiefdruckplatten und den Informationen darüber, ob es sich bei Bildobjekten in den Abbildungen um Näpfchen handelt, weiterhin einen Bewertungsparameter zur Schwere eines Fehlers an einem jeweiligen Näpfchen enthält.

19. Verfahren zur optischen Prüfung der Oberflächen von Tiefdruckzylindern und Tiefdruckplatten nach Anspruch 16, **dadurch gekennzeichnet, dass** die Daten zum Training des zweiten neuronalen Netze im zweiten Schritt neben den Abbildungen der Oberflächen von Tiefdruckzylindern oder Tiefdruckplatten auch Informationen darüber enthielten, ob es sich bei Bildobjekten in den Abbildungen um Näpfchen handelt und ob diese Näpfchen als beschädigt oder verwendbar zu bewerten sind.

20. Verfahren zur optischen Prüfung der Oberflächen von Tiefdruckzylindern und Tiefdruckplatten nach Anspruch 16, **dadurch gekennzeichnet, dass** die Daten zum Training des dritten neuronalen Netzes neben den Abbildungen der Oberflächen von Tiefdruckzylindern oder Tiefdruckplatten auch Informationen darüber enthielten, ob es sich bei Bildobjekten in den Abbildungen um Defekte handelt.

21. Verfahren zur optischen Prüfung der Oberflächen von Tiefdruckzylindern und Tiefdruckplatten nach einem der Ansprüche 16 bis 20, **dadurch gekennzeichnet, dass** die SVM aus der Bewertung des Merkmalsvektors jedes Näpfchens und des Anomaliedefektwertes jedes Defekts und dem einen oder mehreren Messbildern Trainigsdaten zur Verbesserung der Erkennung von Näpfchen durch das erste Neuronale Netz und/oder zur Verbesserung der Erkennung und Bewertung von Näpfchen durch das zweite Neuronale Netz und/oder zur Verbesserung der Erkennung von Defekten durch das dritte neuronale Netz generiert und die Neuronalen Netze in einem dritten Trainingsschritt mit diesem Trainingsdaten trainiert werden.

**Claims**

1. Method for visually inspecting the surfaces of gravure cylinders and gravure plates, comprising at least the following steps:

   a) Place the gravure cylinder or gravure plate into an inspection device,
   b) Scanning optical detection of the surface of the gravure cylinder or the gravure plate by means of an image capture unit in one or more measurement images and detection of the position of the measurement images relative to the surface of the gravure cylinder or the gravure plate

c) Detection of cells by scanning the first measurement image,

d) Comparison of a series of predetermined properties with the given target values assigned to these properties and recording the deviation of each property from the respective target value as a value in a feature vector,

e) Detection of defects in the areas of the first measurement image in which no cells were detected,

f) Determination of an anomaly defect value of a detected defect,

g) Classifying the feature vector of each cell and the anomaly defect value of each defect based on predetermined result weights and allowable tolerance values of each property of the feature vector using a pre-trained support vector machine (SVM) and,

h) Repeat steps c) to g) for each additional measurement image,

i) Output of an evaluation of the gravure cylinder or gravure plate, whereby the evaluation includes at least the information "fault-free" or "faulty".

2.  Method for visually inspecting the surfaces of gravure cylinders and gravure plates according to claim 1, **characterized in that** after step c) an overall image of the surface of the gravure cylinder or the gravure plate is assembled from the measurement images and the method is carried out with this assembled overall image as a measurement image.

3.  Method for visually inspecting the surfaces of gravure cylinders and gravure plates according to claim 1 or 2, **characterized in that** step c) is carried out by means of

    i. Pattern recognition (template matching) with determination of geometric center of gravity and contour of the recognized cell, and/or

    ii. a first pre-trained neural network that recognizes and marks the cells and subsequent determination of the geometric center of gravity and contour of the recognized cell,

4.  Method for visually inspecting the surfaces of gravure cylinders and gravure plates according to one of the preceding claims, **characterized in that** steps c) and d) are carried out by means of a second pre-trained neural network which recognizes and evaluates the cells and transfers a confidence value as a value into the feature vector.

5.  Method according to one of the preceding claims, **characterized in that** step e) is carried out by means of

    i. Threshold method for object detection, and/or

    ii. a pre-trained third neural network

6.  Method for visually inspecting the surfaces of gravure cylinders and gravure plates according to one of the preceding claims, **characterized in that**, on the basis of the known images engraved on the gravure cylinder or the gravure plate, it is checked whether there is a deviation of a cell position from the image data, whereas a value being determined which is included in the feature vector.

7.  Method for visually inspecting the surfaces of gravure cylinders and gravure plates according to one of the preceding claims, **characterized in that** a value is determined from the deviation of the position of individual cells from the regular pattern resulting from the plurality of cells, which is included in the feature vector.

8.  Method for visually inspecting the surfaces of gravure cylinders and gravure plates according to one of the preceding claims, **characterized in that** the measurement images are recorded with overlapping areas.

9.  Method for visually inspecting the surfaces of gravure cylinders and gravure plates according to one of the preceding claims, **characterized in that** the pattern recognition (template matching) is carried out based on the normalized cross-correlation.

10. Method for visually inspecting the surfaces of gravure cylinders and gravure plates according to one of the preceding claims, **characterized in that** the series of predetermined properties includes some or all the following properties: area size deviation, convexity error, convexity hull, shape matches by means of HU moments, contour distances, fractal dimension and a method for evaluating the contour deviation.

11. Method for visually inspecting the surfaces of gravure cylinders and gravure plates according to claim 10, **characterized in that** the method for evaluating the contour deviation includes determining the deviation of the found contour of a cell from the ideal contour of the cell at several, preferably 8, points distributed on the circumference of the found cell and incorporating it into the feature vector.

12. Method for visually inspecting the surfaces of gravure cylinders and gravure plates according to one of the preceding claims, **characterized in that** the first and the second neural network are each a YOLOv4 network.

13. Method for visually inspecting the surfaces of gravure cylinders and gravure plates according to one of the preceding claims, **characterized in that** the third neural network is a convolutional neural network using a patch distribution modeling framework.

14. Method for visually inspecting the surfaces of gravure cylinders and gravure plates according to one of the preceding claims, **characterized in that** the anomaly defect value is determined considering some or all of the following properties of the defect: the area, the dimensions in at least two different directions, the angle of progression.

15. Method for visually inspecting the surfaces of gravure cylinders and gravure plates according to one of the preceding claims, **characterized in that** the SVM is determined in its parameters for classification by correcting the parameters by human intervention until the evaluation of existing measurement images by humans and SVM agree to a predetermined extent.

16. Method for the visual inspection of the surfaces of gravure cylinders and gravure plates according to one of the preceding claims, **characterized in that** the neural networks are trained in a first training step with ideal shapes of the respective cup shapes, which are generated as 2D reference shapes, followed in a second step by training with known data which originate from inspections of the surfaces of gravure cylinders or gravure plates.

17. Gravure plates according to claim 16, **characterized in that** the data for training the first and second neural network in the second step contain, in addition to the images of the surfaces of gravure cylinders or gravure plates, information about whether image objects in the images are cells.

18. Method according to claim 16, **characterized in that** the data for training the second neural network in the second step further contains, in addition to the images of the surfaces of gravure cylinders or gravure plates and the information as to whether image objects in the images are cells, an evaluation parameter for the severity of a defect at a respective cell.

19. Method for visually inspecting the surfaces of gravure cylinders and gravure plates according to claim 16, **characterized in that** the data for training the second neural network in the second step contain, in addition to the images of the surfaces of gravure cylinders or gravure plates, information on whether image objects in the images are cells and whether these cells are to be assessed as damaged or usable.

20. Method for visually inspecting the surfaces of gravure cylinders and gravure plates according to claim 16, **characterized in that** the data for training the third neural network contain, in addition to the images of the surfaces of gravure cylinders or gravure plates, information as to whether objects in the images are defects.

21. Method for visually inspecting the surfaces of gravure cylinders and gravure plates according to one of claims 16 to 20, **characterized in that** the SVM generates training data for improving the detection of cells by the first neural network and/or for improving the detection and evaluation of cells by the second neural network and/or for improving the detection of defects by the third neural network from the evaluation of the feature vector of each cell and the anomaly defect value of each defect and the one or more measurement images, and the neural networks are trained with this training data in a third training step.

**Revendications**

1. Procédé permettant le contrôle optique des surfaces de cylindres d'héliogravure et de plaques d'héliogravure, présentant au moins les étapes suivantes :

   a) placement du cylindre d'héliogravure ou de la plaque d'héliogravure dans un dispositif d'inspection,
   b) détection optique par balayage de la surface du cylindre d'héliogravure ou de la plaque d'héliogravure au moyen d'une unité de détection d'images dans une ou plusieurs images de mesure ainsi que détection de la position des images de mesure par rapport à la surface du cylindre d'héliogravure ou de la plaque d'héliogravure,

c) reconnaissance d'alvéoles par balayage de la première image de mesure,

d) comparaison d'une série de propriétés prédéfinies des alvéoles avec les valeurs de consigne prédéfinies associées auxdites propriétés et enregistrement de l'écart de chaque propriété par rapport à la valeur de consigne respective en tant que valeur dans un vecteur de caractéristiques,

e) reconnaissance de défauts dans les zones de la première image de mesure dans lesquelles aucune alvéole n'a été reconnue,

f) détermination d'une valeur de défaut d'anomalie d'un défaut reconnu,

g) classification du vecteur de caractéristiques de chaque alvéole et de la valeur de défaut d'anomalie de chaque défaut à l'aide d'une pondération de résultat prédéfinie et de valeurs de tolérance admissibles de chaque propriété du vecteur de caractéristiques au moyen d'un séparateur à vaste marge (SVM) pré-entraîné et,

h) répétition des étapes c) à g) pour chaque image de mesure supplémentaire,

i) sortie d'une évaluation du cylindre d'héliogravure ou de la plaque d'héliogravure, dans lequel l'évaluation comprend au moins les indications « sans défaut » ou « défectueux ».

2. Procédé permettant le contrôle optique des surfaces de cylindres d'héliogravure et de plaques d'héliogravure selon la revendication 1, **caractérisé en ce qu'**après l'étape c), un assemblage d'une image globale de la surface du cylindre d'héliogravure ou de la plaque d'héliogravure est effectué à partir des images de mesure et le procédé est mis en œuvre avec ladite image globale assemblée en tant qu'image de mesure.

3. Procédé permettant le contrôle optique des surfaces de cylindres d'héliogravure et de plaques d'héliogravure selon la revendication 1 ou 2, **caractérisé en ce que** l'étape c) est effectuée au moyen de

   i. de la reconnaissance de formes de référence (appariement de modèles) avec détermination du centre de gravité géométrique et du contour de l'alvéole reconnue, et/ou

   ii. d'un premier réseau neuronal pré-entraîné qui reconnaît et marque les alvéoles, ainsi que de la détermination subséquente du centre de gravité géométrique et du contour de l'alvéole reconnue.

4. Procédé permettant le contrôle optique des surfaces de cylindres d'héliogravure et de plaques d'héliogravure selon l'une des revendications précédentes, **caractérisé en ce que** les étapes c) et d) sont effectuées au moyen d'un deuxième réseau neuronal pré-entraîné qui reconnaît et évalue les alvéoles et transfère une valeur de confiance en tant que valeur dans le vecteur de caractéristiques.

5. Procédé selon l'une des revendications précédentes,
   **caractérisé en ce que** l'étape e) est effectuée au moyen

   i. d'un procédé de valeur seuil pour la reconnaissance d'objets, et/ou

   ii. d'un troisième réseau neuronal pré-entraîné.

6. Procédé permettant le contrôle optique des surfaces de cylindres d'héliogravure et de plaques d'héliogravure selon l'une des revendications précédentes, **caractérisé en ce que,** sur la base des images connues qui sont gravées sur le cylindre d'héliogravure ou sur la plaque d'héliogravure, on vérifie s'il existe un écart entre une position d'alvéole et les données d'images, dans lequel une valeur est établie, laquelle entre dans le vecteur de caractéristiques.

7. Procédé permettant le contrôle optique des surfaces de cylindres d'héliogravure et de plaques d'héliogravure selon l'une des revendications précédentes, **caractérisé en ce qu'**une valeur est établie à partir de l'écart entre la position de différentes alvéoles et la forme de référence régulière résultant de la pluralité d'alvéoles, laquelle valeur entre dans le vecteur caractéristique.

8. Procédé permettant le contrôle optique des surfaces de cylindres d'héliogravure et de plaques d'héliogravure selon l'une des revendications précédentes, **caractérisé en ce que** les images de mesure sont prises avec des zones de chevauchement.

9. Procédé permettant le contrôle optique des surfaces de cylindres d'héliogravure et de plaques d'héliogravure selon la revendication 3, **caractérisé en ce que** la reconnaissance de formes de référence (appariement de modèles) est effectuée sur la base de la corrélation croisée normalisée.

10. Procédé permettant le contrôle optique des surfaces de cylindres d'héliogravure et de plaques d'héliogravure selon l'une des revendications précédentes, **caractérisé en ce que** la série de propriétés prédéfinies comprend tout ou partie des propriétés suivantes : écart de taille de surface, défaut de convexité, convexité d'enveloppe, correspondances de forme au moyen de moments de Hu, distances de contour, dimension fractale ainsi qu'un procédé permettant l'évaluation de l'écart de contour.

11. Procédé permettant le contrôle optique des surfaces de cylindres d'héliogravure et de plaques d'héliogravure selon la revendication 10, **caractérisé en ce que** le procédé permettant l'évaluation de l'écart de contour comprend le fait d'établir l'écart du contour trouvé d'une alvéole par rapport au contour idéal de l'alvéole en plusieurs points, de préférence 8, répartis sur la circonférence de l'alvéole trouvée et de l'enregistrer dans le vecteur de caractéristiques.

12. Procédé permettant le contrôle optique des surfaces de cylindres d'héliogravure et de plaques d'héliogravure selon l'une des revendications 3 à 5, **caractérisé en ce que** le premier et le deuxième réseau neuronal sont respectivement un réseau YOLOv4.

13. Procédé permettant le contrôle optique des surfaces de cylindres d'héliogravure et de plaques d'héliogravure selon l'une des revendications 3 à 5, **caractérisé en ce que** le troisième réseau neuronal est un réseau neuronal convolutif utilisant un cadre de modélisation de distribution de carrés.

14. Procédé permettant le contrôle optique des surfaces de cylindres d'héliogravure et de plaques d'héliogravure selon l'une des revendications précédentes, **caractérisé en ce que** la valeur de défaut d'anomalie est établie en tenant compte de tout ou partie des propriétés suivantes du défaut : la surface, les extensions dans au moins deux directions différentes, l'angle d'extension.

15. Procédé permettant le contrôle optique des surfaces de cylindres d'héliogravure et de plaques d'héliogravure selon l'une des revendications précédentes, **caractérisé en ce que** le SVM est fixé dans ses paramètres pour la classification en corrigeant les paramètres par intervention humaine jusqu'à ce que l'évaluation d'images de mesure existantes par l'homme et le SVM coïncident dans une mesure prédéfinie.

16. Procédé permettant le contrôle optique des surfaces de cylindres d'héliogravure et de plaques d'héliogravure selon les revendications 3 à 5, **caractérisé en ce que** les réseaux neuronaux sont entraînés dans une première étape d'entraînement avec des formes idéales des formes d'alvéole respectives, lesquelles sont générées en tant que formes de référence 2D, puis, dans une deuxième étape, un entraînement est effectué avec des données connues qui proviennent d'inspections des surfaces de cylindres d'héliogravure ou de plaques d'héliogravure.

17. Procédé selon la revendication 16, **caractérisé en ce que** les données pour l'entraînement du premier et du deuxième réseau neuronal dans la deuxième étape contenaient également, outre les représentations des surfaces des cylindres d'héliogravure ou des plaques d'héliogravure, des informations sur le fait de savoir si des objets d'image dans les représentations sont des alvéoles ou non.

18. Procédé selon la revendication 16, **caractérisé en ce que** les données pour l'entraînement du deuxième réseau neuronal dans la deuxième étape contiennent également, outre les représentations des surfaces de cylindres d'héliogravure ou de plaques d'héliogravure et les informations sur le fait de savoir si des objets d'image dans les représentations sont des alvéoles ou non, un paramètre d'évaluation pour la gravité d'un défaut sur une alvéole respective.

19. Procédé permettant le contrôle optique des surfaces de cylindres d'héliogravure et de plaques d'héliogravure selon la revendication 16, **caractérisé en ce que** les données pour l'entraînement du deuxième réseau neuronal dans la deuxième étape contenaient également, outre les représentations des surfaces de cylindres d'héliogravure ou de plaques d'héliogravure, des informations sur le fait de savoir si des objets d'image dans les représentations sont des alvéoles ou non et si lesdites alvéoles doivent être évaluées comme endommagées ou utilisables.

20. Procédé permettant le contrôle optique des surfaces de cylindres d'héliogravure et de plaques d'héliogravure selon la revendication 16, **caractérisé en ce que** les données pour l'entraînement du troisième réseau neuronal contenaient également, outre les représentations des surfaces de cylindres d'héliogravure ou de plaques d'héliogravure, des informations sur le fait de savoir si des objets d'image dans les représentations sont des défauts ou non.

21. Procédé permettant le contrôle optique des surfaces de cylindres d'héliogravure et de plaques d'héliogravure selon l'une des revendications 16 à 20, **caractérisé en ce que** le SVM génère, à partir de l'évaluation du vecteur de caractéristiques de chaque alvéole et de la valeur de défaut d'anomalie de chaque défaut et de l'une ou de plusieurs images de mesure, des données d'entraînement pour l'amélioration de la reconnaissance d'alvéoles par le premier réseau neuronal et/ou pour l'amélioration de la reconnaissance et de l'évaluation d'alvéoles par le deuxième réseau neuronal et/ou pour l'amélioration de la reconnaissance de défauts par le troisième réseau neuronal, et les réseaux neuronaux sont entraînés avec lesdites données d'entraînement dans une troisième étape d'entraînement.

**Fig. 1**

Bildverarbeitungssoftware
- Bildbearbeitung
- Ergebnisbeurteilung
- Künstliche Intelligenz
- Machine Learning
- ...

**Fig. 2**

EP 4 306 322 B1

Fig. 3

Fig. 4

26

Fig. 5

Fig. 6

Maxima über
Templateskalen

Fig. 7

Fig. 8

Fig. 9

Fig. 10

Fig. 11

Fig. 12

Start

Bildaufnahme

Bildaufbereitung

Objektdetektion ← trainierter Objektdetektor ← Objekt Modell trainieren überwachtes Lernen

Objektidentifikation

Objekt Merkmalsvektor

fehlerfreien Objektbereich markieren ← OK — Objekt Merkmalsvektor 1. Stufe — Fehler → fehlerhaften Objektbereich markieren

Objektqualifizierung 2. Stufe

fehlerfreien Objektbereich markieren ← OK — Objekt Merkmalsvektor 2. Stufe — Fehler → fehlerhaften Objektbereich markieren

Anomaliedetektion ← trainierter Anomaliedetektor ← Anomalie Modell trainieren überwachtes Lernen ← Anomalie — Modell aktualisieren — Objekt

Anomalieidentifikation

fehlerfreien Anomaliebereich markieren ← OK — Anomalie Merkmalsvektor — Fehler → fehlerhaften Anomaliebereich markieren

Klassifikation SCM Support Vector Machine ← trainierte SVM Klassifikation ← trainieren der SVM Klassifikation

Ergebnis charakteristischer Ergebnisraum

Lernen verbessern — Ja → SVM Objekt - Anomalie — Modell / SVM

Ende

**Fig. 13**

Fig . 14

**EP 4 306 322 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019117680 A1
- DE 102008016538 A1
- EP 0749833 A2
- EP 0795400 A1
- GB 2159622 A
- JP 2012154830 B
- US 20070201066 A1
- US 20190340740 A1
- US 20170246853 A1
- CN 108481891 A

- EP 0636475 B1
- DE 102005002351 A1
- JP 2002254590 B
- JP 2018039117 A
- WO 2008049510 A1
- US 2007089625 A1
- JP 2014106069 A
- CN 106739485 A
- JP 2019117105 A

**In der Beschreibung aufgeführte Nicht-Patentliteratur**

- **SHAOQING REN**. Faster R-CNN: Towards Real-Time Object Detection with RegionProposal Networks. *CoRR abs/1506.01497 (2016). arXiv: 1506.01497*, 2016, http://arxiv.org/abs/1506.01497
- **TSUNG-YI LIN**. Focal Loss for Dense Object Detection. *CoRR abs/1708.02002 (2017). arXiv: 1708.02002*, 2017, http://arxiv.org/abs/1708.02002
- **ALEXEY BOCHKOVSKIY** ; **CHIEN-YAO WANG** ; **HONG-YUAN MARK LIAO**. YOLOv4: Optimal Speed and Accuracy of Object Detection. *CoRR abs/2004.10934 (2020). arXiv: 2004.10934*, 2020, https://arxiv.org/abs/2004.10934
- **JOSEPH REDMON**. You only look once: Unified, reaktime object detection. *Techn. Ber.*, 2016, 779-788, URL: http://pjreddie.com/yolo
- **ROSS GIRSHICK**. Rich feature hierarchies for accurate object detection and semantic segmentation. *Tech report (v5). Techn. Ber. arXiv: 1311.2524v5*

- **ROSS GIRSHICK**. Fast R-CNN. *Techn. Ber. arXiv: 1504.08083v2*, https://github.com/rbgirshick
- **SHAOQING REN**. Faster R-CNN: Towards Real-Time Object Detection with Region Proposal Networks. *Techn. Ber.*, 2017, vol. 6, 1137-1149
- **MING-KUEI HU**. *Visual Pattern Recognition by Moment Invariants*
- **SHAOQING REN**. Faster R-CNN: Towards Real-Time Object Detection with Region Proposal Networks. *CoRR abs/1506.01497 (2016). arXiv: 1506.01497*, 2016, http://arxiv.org/abs/1506.01497
- **ROSS GIRSHICK**. Fast R-CNN. *Techn. Ber. arXiv: 1504.08083v2*, https://gith ub.com/rbgirshick
- **JOSEPH REDMON**. You only look once: Unified, reaktime object detection. *Techn. Ber.*, 2016, 779-788, http://pjreddie.com/yolo
- **THOMAS DEFARD**. PaDiM: a Patch Distribution-Modeling Framework for Anomaly Detection and Localization. *CoRR abs/2011.08785 (2020). arXiv: 2011.08785*, https://arxiv.org/abs/2011.08785